# EUROPEAN PATENT APPLICATION

(11) **EP 4 842 091 A1**
(43) Date of publication of application: **18.11.2026**
(21) Application number: 25738499.0
(22) Date of filing: 09.01.2025
(51) Int. Cl.: H04W 64/00

(54) **INFORMATION PROCESSING METHOD, TERMINAL, CORE NETWORK DEVICE AND POSITIONING REFERENCE UNIT**

(30) Priority: 12.01.2024 CN 202410052385
(71) Applicant: Datang Mobile Communications Equipment Co., Ltd., Beijing 100085 (CN)
(72) Inventor: REN, Bin, Beijing 100085 (CN); DA, Ren, Beijing 100085 (CN); REN, Xiaotao, Beijing 100085 (CN)
(74) Representative: Studio Torta S.p.A.
(86) International application number: PCT/CN2025/071493
(87) International publication number: WO 2025/148970

(57) **Abstract**

The present disclosure provides an information processing method, a UE, a core network device, and a positioning reference unit. The method includes: receiving, by a UE, a first message transmitted by a first core network device; wherein the first message carries a first differential correction value; performing, by the UE, positioning calculation according to the first differential correction value. The first differential correction value includes at least one of the following: a high-accuracy relative time difference (HRTD) between a non-reference TRP and a reference TRP; a relative phase difference (RPD) between a non-reference TRP and a reference TRP; time variation rate of the HRTD; or time variation rate of the RPD.

## Description

### CROSS-REFERENCE TO RELATED APPLICATION

The present application is filed based on and claims the priority of Chinese Application No. 202410052385.X filed on January 12, 2024, entitled "information processing method, terminal, core network device and positioning reference unit", the disclosure of which are incorporated in their entireties by reference herein.

### TECHNICAL FIELD

The present disclosure relates to the field of communication technologies, and in particular, to an information processing method, a terminal, a core network device, and a positioning reference unit.

### BACKGROUND

Downlink positioning methods include: Downlink Time Difference of Arrival (DL-TDOA) based positioning method, and Downlink Angle-of-Departure (DL-AoD) based positioning method. It supports the use of assistance data to notify Relative Time Difference (RTD) between different Transmission and Reception Points (TRPs). However, the granularity of RTDs currently supported is relatively coarse, which cannot meet the timing accuracy requirements for Carrier Phase Positioning (CPP). Further, each RTD only represents a timing offset between TRPs at a specific moment; for a target terminal side, there may be a offset between an RTD it receives and an RTD at an actual positioning moment, which will lead to reduced positioning accuracy.

Moreover, to achieve dual-difference function, one possible solution is that a Positioning Reference Unit (PRU) directly reports reference signal measurement quantities to a Location Management Function (LMF) network element, and then the LMF forwards them to a target terminal. This solution requires the PRU and the target terminal to measure the downlink Positioning Reference Signal (PRS) within the same relatively short time window. When the PRU needs to serve a large number of target terminals, this results in a heavy load on the PRU and generates significant signaling overhead.

### SUMMARY

The present disclosure provides an information processing method, a terminal, a core network device, and a positioning reference unit, which can solve the problems of poor positioning accuracy, heavy load on the PRU and significant signaling overhead in current positioning methods.

One embodiment of the present disclosure provides an information processing method, including:
receiving, by a terminal, a first message transmitted by a first core network device; wherein the first message carries a first differential correction value;
performing, by the terminal, positioning calculation according to the first differential correction value;
wherein the first differential correction value includes at least one of the following:
   a High-accuracy Relative Time Difference (HRTD) between a non-reference TRP and a reference TRP;
   a Relative Phase Difference (RPD) between a non-reference TRP and a reference TRP;
   time variation rate of the HRTD; or
   time variation rate of the RPD.

In some embodiments, the first message further carries at least one of the following information:
TRP transmission Timing Error Group Identity (TEG ID);
TRP transmission antenna identity;
Antenna Reference Point Identity (ARP ID);
time information corresponding to the HRTD; or,
time information corresponding to the RPD.

In some embodiments, the granularity of the HRTD is smaller than *T_{c}*; wherein *T_{c}* = 1/(Δ*fₘₐₓ* · *N_{f}*), Δ*fₘₐₓ* is the maximum subcarrier spacing, and *N_{f}* is the number of Fast Fourier Transform (FFT) points.

In some embodiments, before receiving, by a terminal, a first message transmitted by a first core network device, the method further includes:

transmitting, by the terminal, a second message to the first core network device; wherein the second message carries a type of differential correction value that the terminal expects to be provided by the first core network device.

In some embodiments, the first message further carries positioning assistance data;
or,
the first message carries positioning assistance data, and the positioning assistance data includes the first differential correction value;
   or,
the first message is used to request UE capability.

In some embodiments, the performing, by the terminal, positioning calculation according to the first differential correction value, includes:
eliminating, by the terminal, according to the first differential correction value, phase offset and/or timing offset in Reference Signal Carrier Phase Difference (RSCPD) measurement quantities, thereby obtaining a first RSCPD;
performing positioning calculation according to the first RSCPD.

One embodiment of the present disclosure provides an information processing method, including:
transmitting, by a first core network device, a first message to a terminal; wherein the first message carries a first differential correction value, and the first differential correction value includes at least one of the following:
a High-accuracy Relative Time Difference (HRTD) between a non-reference TRP and a reference TRP;
a Relative Phase Difference (RPD) between a non-reference TRP and a reference TRP;
time variation rate of the HRTD; or
time variation rate of the RPD.

In some embodiments, the first message further carries at least one of the following information:
TRP transmission Timing Error Group Identity (TEG ID);
TRP transmission antenna identity;
Antenna Reference Point Identity (ARP ID);
time information corresponding to the HRTD; or,
time information corresponding to the RPD.

In some embodiments, the granularity of the HRTD is smaller than *T_{c}*; wherein *T_{c}* = 1/(Δ*fₘₐₓ* · *N_{f}*), Δ*fₘₐₓ* is the maximum subcarrier spacing, and *N_{f}* is the number of Fast Fourier Transform (FFT) points.

In some embodiments, before transmitting, by a first core network device, a first message to a terminal, the method further includes:
receiving, by the first core network device, a second message transmitted by the terminal; wherein the second message carries a type of differential correction value that the terminal expects to be provided by the first core network device.

In some embodiments, before transmitting, by a first core network device, a first message to a terminal, the method further includes:
determining, by the first core network device, the first differential correction value.

In some embodiments, the determining, by the first core network device, the first differential correction value, includes:
receiving, by the first core network device, a third message transmitted by one or more TRPs; wherein the third message carries a second differential correction value;
determining, by the first core network device, the first differential correction value according to the second differential correction value;
wherein the second differential correction value includes at least one of the following:
a High-accuracy Relative Time Difference (HRTD) between a non-reference TRP and a reference TRP;
a Relative Phase Difference (RPD) between a non-reference TRP and a reference TRP;
time variation rate of the HRTD; or
time variation rate of the RPD.

In some embodiments, before receiving, by the first core network device, a third message transmitted by one or more TRPs, the method further includes:
transmitting, by the first core network device, a fourth message to the one or more TRPs; wherein the fourth message is used to request for obtaining the first differential correction value, and the fourth message carries information related to the reference TRP.

In some embodiments, the determining, by the first core network device, the first differential correction value, includes:
receiving, by the first core network device, a fifth message transmitted by one or more PRUs; wherein the fifth message carries a second differential correction value;
determining, by the first core network device, the first differential correction value according to the second differential correction value;
wherein the second differential correction value includes at least one of the following:
a High-accuracy Relative Time Difference (HRTD) between a non-reference TRP and a reference TRP;
a Relative Phase Difference (RPD) between a non-reference TRP and a reference TRP;
time variation rate of the HRTD; or
time variation rate of the RPD.

In some embodiments, the determining, by the first core network device, the first differential correction value according to the second differential correction value, includes:
in case that the second differential correction value is transmitted by one TRP or one PRU, determining the second differential correction value as the first differential correction value;
   and/or,
in case that second differential correction values are transmitted by multiple TRPs or multiple PRUs, performing averaging or combining processing on the second differential correction values to obtain the first differential correction value.

In some embodiments, the determining, by the first core network device, the first differential correction value, includes:
receiving, by the first core network device, a fifth message transmitted by one or more PRUs; wherein the fifth message carries reference signal measurement quantities and measurement quality indicators;
in case that the measurement quality indicators meet a differential correction accuracy requirement, determining, by the first core network device, the first differential correction value according to the reference signal measurement quantities.

In some embodiments, the reference signal measurement quantities include: RSTD measurement quantities, and/or, RSCPD measurement quantities;
and/or,
the measurement quality indicators include: measurement quality indicators of RSTD, and/or, measurement quality indicators of RSCPD.

In some embodiments, the determining, by the first core network device, the first differential correction value according to the reference signal measurement quantities, includes:
processing, by the first core network device, the reference signal measurement quantities to obtain a second differential correction value;
in case that the reference signal measurement quantities are transmitted by one PRU, determining, by the first core network device, the second differential correction value as the first differential correction value; and/or, in case that the reference signal measurement quantities are transmitted by multiple PRUs, performing, by the first core network device, averaging or combining processing on the second differential correction values corresponding to the multiple PRUs to obtain the first differential correction value.

In some embodiments, the processing, by the first core network device, the reference signal measurement quantities to obtain a second differential correction value, includes:
performing, by the first core network device, a difference operation between an RSTD measurement quantity and an ideal RSTD value to obtain an HRTD;
performing, by the first core network device, a difference operation between an RSCPD measurement quantity and an ideal RSCPD value to obtain an RPD;
determining, by the first core network device, a time variation rate of HRTD according to HRTDs at different moments;
determining, by the first core network device, a time variation rate of RPD according to RPDs at different moments.

In some embodiments, the receiving, by the first core network device, a fifth message transmitted by one or more PRUs, includes:
transmitting, by the first core network device, a sixth message to the one or more PRUs; wherein the sixth message is used to request for obtaining the first differential correction value, and the sixth message carries information related to the reference TRP.

In some embodiments, the first message further carries positioning assistance data;
or,
the first message carries positioning assistance data, and the positioning assistance data includes the first differential correction value;
   or,
the first message is used to request UE capability.

One embodiment of the present disclosure provides an information processing method, including:
transmitting, by a Transmission and Reception Point (TRP), a third message to a first core network device; wherein the third message carries a second differential correction value, and the second differential correction value includes at least one of the following:
a High-accuracy Relative Time Difference (HRTD) between a non-reference TRP and a reference TRP;
a Relative Phase Difference (RPD) between a non-reference TRP and a reference TRP;
time variation rate of the HRTD; or
time variation rate of the RPD.

In some embodiments, the granularity of the HRTD is smaller than *T_{c}*; wherein *T_{c}* = 1/(Δ*fₘₐₓ* · *N_{f}*), Δ*fₘₐₓ* is the maximum subcarrier spacing, and *N_{f}* is the number of Fast Fourier Transform (FFT) points.

In some embodiments, before transmitting, by a Transmission and Reception Point (TRP), a third message to a first core network device, the method further includes:
receiving, by the TRP, a fourth message transmitted by the first core network device; wherein the fourth message is used to request for obtaining a first differential correction value, and the fourth message carries information related to the reference TRP.

In some embodiments, the transmitting, by a Transmission and Reception Point (TRP), a third message to a first core network device, includes:
transmitting, by the TRP, the third message to the first core network device in a periodic manner;
   or,
in case that a first condition is satisfied, transmitting, by the TRP, the third message to the first core network device;
wherein the first condition includes at least one of the following:
   the HRTD is greater than a first threshold;
   the RPD is greater than a second threshold;
   a measurement quality indication of an RSTD is greater than a third threshold;
   a measurement quality indication of an RSCPD is greater than a fourth threshold.

One embodiment of the present disclosure provides information processing method, including:
transmitting, by a Positioning Reference Unit (PRU), a fifth message to a first core network device; wherein the fifth message carries a second differential correction value, or the fifth message carries reference signal measurement quantities and measurement quality indicators;
wherein the second differential correction value includes at least one of the following:
   a High-precision Relative Time Difference (HRTD) between a non-reference TRP and a reference TRP;
   a Relative Phase Difference (RPD) between a non-reference TRP and a reference TRP;
   a time variation rate of the HRTD;
   time variation rate of the RPD.

In some embodiments, the reference signal measurement quantities include: RSTD measurement quantities, and/or, RSCPD measurement quantities;
and/or,
the measurement quality indicators include: measurement quality indicators of RSTD, and/or, measurement quality indicators of RSCPD.

In some embodiments, the granularity of the HRTD is smaller than *T_{c}*; where *T_{c}* = 1/(Δ*fₘₐₓ* · *N_{f}*), Δ*fₘₐₓ* is the maximum subcarrier spacing, and *N_{f}* is the number of Fast Fourier Transform (FFT) points.

In some embodiments, before transmitting, by a Positioning Reference Unit (PRU), a fifth message to a first core network device, the method further includes:
receiving, by the PRU, a sixth message transmitted by the first core network device; wherein the sixth message is used to request for obtaining the first differential correction value, and the sixth message carries information related to the reference TRP.

In some embodiments, the transmitting, by a Positioning Reference Unit (PRU), a fifth message to a first core network device, includes:
measuring, by the PRU, a positioning reference signal (PRS) transmitted by a TRP to obtain the reference signal measurement quantities and measurement quality indicators;
transmitting, by the PRU, the fifth message to the first core network device; wherein the fifth message carries the reference signal measurement quantities and measurement quality indicators.

In some embodiments, the transmitting, by a Positioning Reference Unit (PRU), a fifth message to a first core network device, includes:
measuring, by the PRU, a positioning reference signal (PRS) transmitted by a TRP to obtain the reference signal measurement quantities and measurement quality indicators;
in case that the measurement quality indicators meet differential correction accuracy requirement, processing, by the PRU, the reference signal measurement quantities to obtain the second differential correction value;
transmitting, by the PRU, the fifth message to the first core network device; wherein the fifth message carries the second differential correction value.

In some embodiments, the processing, by the PRU, the reference signal measurement quantities to obtain the second differential correction value, includes at least one of the following:
performing, by the PRU, a difference operation between an RSTD measurement quantity and an ideal RSTD value to obtain an HRTD;
performing, by the PRU, a difference operation between an RSCPD measurement quantity and an ideal RSCPD value to obtain an RPD;
determining, by the PRU, a time variation rate of HRTD according to HRTDs at different moments;
determining, by the PRU, a time variation rate of RPD according to RPDs at different moments.

One embodiment of the present disclosure provides a terminal, including: a memory, a transceiver, and a processor;
wherein the memory is used to store a computer program; the transceiver is used to transmit and receive data under control of the processor; the processor is used to read the computer program in the memory and perform the following operations:
receiving a first message transmitted by a first core network device; wherein the first message carries a first differential correction value;
performing positioning calculation according to the first differential correction value;
wherein the first differential correction value includes at least one of the following:
a High-accuracy Relative Time Difference (HRTD) between a non-reference TRP and a reference TRP;
a Relative Phase Difference (RPD) between a non-reference TRP and a reference TRP;
time variation rate of the HRTD; or
time variation rate of the RPD.

In some embodiments, the first message further carries at least one of the following information:
TRP transmission Timing Error Group Identity (TEG ID);
TRP transmission antenna identity;
Antenna Reference Point Identity (ARP ID);
time information corresponding to the HRTD; or,
time information corresponding to the RPD.

In some embodiments, the processor is used to read the computer program in the memory and perform the following operations:
transmitting a second message to the first core network device; wherein the second message carries a type of differential correction value that the terminal expects to be provided by the first core network device.

In some embodiments, the processor is used to read the computer program in the memory and perform the following operations:
eliminating, according to the first differential correction value, phase offset and/or timing offset in Reference Signal Carrier Phase Difference (RSCPD) measurement quantities, thereby obtaining a first RSCPD;
performing positioning calculation according to the first RSCPD.

One embodiment of the present disclosure provides a terminal, including:
a receiving unit used to receive a first message transmitted by a first core network device; wherein the first message carries a first differential correction value;
a processing unit used to perform positioning calculation according to the first differential correction value;
wherein the first differential correction value includes at least one of the following:
   a High-accuracy Relative Time Difference (HRTD) between a non-reference TRP and a reference TRP;
   a Relative Phase Difference (RPD) between a non-reference TRP and a reference TRP;
   time variation rate of the HRTD; or
   time variation rate of the RPD.

One embodiment of the present disclosure provides a core network device, including: a memory, a transceiver, and a processor;
wherein the memory is used to store a computer program; the transceiver is used to transmit and receive data under control of the processor; the processor is used to read the computer program in the memory and perform the following operation:
transmitting a first message to a terminal; wherein the first message carries a first differential correction value, and the first differential correction value includes at least one of the following:
a High-accuracy Relative Time Difference (HRTD) between a non-reference TRP and a reference TRP;
a Relative Phase Difference (RPD) between a non-reference TRP and a reference TRP;
time variation rate of the HRTD; or
time variation rate of the RPD.

In some embodiments, the first message further carries at least one of the following information:
TRP transmission Timing Error Group Identity (TEG ID);
TRP transmission antenna identity;
Antenna Reference Point Identity (ARP ID);
time information corresponding to the HRTD; or,
time information corresponding to the RPD.

In some embodiments, the processor is used to read the computer program in the memory and perform the following operation:
receiving a second message transmitted by the terminal; wherein the second message carries a type of differential correction value that the terminal expects to be provided by the first core network device.

In some embodiments, the processor is used to read the computer program in the memory and perform the following operation:
receiving a third message transmitted by one or more TRPs; wherein the third message carries a second differential correction value;
determining the first differential correction value according to the second differential correction value;
wherein the second differential correction value includes at least one of the following:
   a High-accuracy Relative Time Difference (HRTD) between a non-reference TRP and a reference TRP;
   a Relative Phase Difference (RPD) between a non-reference TRP and a reference TRP;
   time variation rate of the HRTD; or
   time variation rate of the RPD.

In some embodiments, the processor is used to read the computer program in the memory and perform the following operation:
receiving a fifth message transmitted by one or more PRUs; wherein the fifth message carries a second differential correction value;
determining the first differential correction value according to the second differential correction value;
wherein the second differential correction value includes at least one of the following:
   a High-accuracy Relative Time Difference (HRTD) between a non-reference TRP and a reference TRP;
   a Relative Phase Difference (RPD) between a non-reference TRP and a reference TRP;
   time variation rate of the HRTD; or
   time variation rate of the RPD.

In some embodiments, the processor is used to read the computer program in the memory and perform the following operation:
receiving a fifth message transmitted by one or more PRUs; wherein the fifth message carries reference signal measurement quantities and measurement quality indicators;
in case that the measurement quality indicators meet a differential correction accuracy requirement, determining the first differential correction value according to the reference signal measurement quantities.

One embodiment of the present disclosure provides a core network device, including:
a first transmission unit used to transmit a first message to a terminal; wherein the first message carries a first differential correction value, and the first differential correction value includes at least one of the following:
a High-accuracy Relative Time Difference (HRTD) between a non-reference TRP and a reference TRP;
a Relative Phase Difference (RPD) between a non-reference TRP and a reference TRP;
time variation rate of the HRTD; or
time variation rate of the RPD.

One embodiment of the present disclosure provides a transmission and reception point (TRP), including: a memory, a transceiver, and a processor;
wherein the memory is used to store a computer program; the transceiver is used to transmit and receive data under control of the processor; the processor is used to read the computer program in the memory and perform the following operation:
transmitting a third message to a first core network device; wherein the third message carries a second differential correction value, and the second differential correction value includes at least one of the following:
a High-accuracy Relative Time Difference (HRTD) between a non-reference TRP and a reference TRP;
a Relative Phase Difference (RPD) between a non-reference TRP and a reference TRP;
time variation rate of the HRTD; or
time variation rate of the RPD.

In some embodiments, the processor is used to read the computer program in the memory and perform the following operation:
transmitting the third message to the first core network device in a periodic manner;
   or,
in case that a first condition is satisfied, transmitting the third message to the first core network device;
wherein the first condition includes at least one of the following:
   the HRTD is greater than a first threshold;
   the RPD is greater than a second threshold;
   a measurement quality indication of an RSTD is greater than a third threshold;
   a measurement quality indication of an RSCPD is greater than a fourth threshold.

One embodiment of the present disclosure provides a transmission and reception point (TRP), including:
a transmission unit used to transmit a third message to a first core network device; wherein the third message carries a second differential correction value, and the second differential correction value includes at least one of the following:
a High-accuracy Relative Time Difference (HRTD) between a non-reference TRP and a reference TRP;
a Relative Phase Difference (RPD) between a non-reference TRP and a reference TRP;
time variation rate of the HRTD; or
time variation rate of the RPD.

One embodiment of the present disclosure provides a positioning reference unit (PRU), including: a memory, a transceiver, and a processor;
wherein the memory is used to store a computer program; the transceiver is used to transmit and receive data under control of the processor; the processor is used to read the computer program in the memory and perform the following operation:
transmitting a fifth message to a first core network device; wherein the fifth message carries a second differential correction value, or the fifth message carries reference signal measurement quantities and measurement quality indicators;
wherein the second differential correction value includes at least one of the following:
   a High-precision Relative Time Difference (HRTD) between a non-reference TRP and a reference TRP;
   a Relative Phase Difference (RPD) between a non-reference TRP and a reference TRP;
   a time variation rate of the HRTD;
   time variation rate of the RPD.

In some embodiments, the processor is used to read the computer program in the memory and perform the following operation:
measuring a positioning reference signal (PRS) transmitted by a TRP to obtain the reference signal measurement quantities and measurement quality indicators;
transmitting the fifth message to the first core network device; wherein the fifth message carries the reference signal measurement quantities and measurement quality indicators.

In some embodiments, the processor is used to read the computer program in the memory and perform the following operation:
measuring a positioning reference signal (PRS) transmitted by a TRP to obtain the reference signal measurement quantities and measurement quality indicators;
in case that the measurement quality indicators meet differential correction accuracy requirement, processing the reference signal measurement quantities to obtain the second differential correction value;
transmitting the fifth message to the first core network device; wherein the fifth message carries the second differential correction value.

One embodiment of the present disclosure provides a positioning reference unit (PRU), including:
a transmission unit used to transmit a fifth message to a first core network device; wherein the fifth message carries a second differential correction value, or the fifth message carries reference signal measurement quantities and measurement quality indicators;
wherein the second differential correction value includes at least one of the following:
   a High-precision Relative Time Difference (HRTD) between a non-reference TRP and a reference TRP;
   a Relative Phase Difference (RPD) between a non-reference TRP and a reference TRP;
   a time variation rate of the HRTD;
   time variation rate of the RPD.

One embodiment of the present disclosure provides a processor-readable storage medium, including a computer program stored thereon; wherein the computer program is used to cause a processor to execute steps of the above information processing method.

Beneficial effects of the above technical solution of the present disclosure are as follows.

In the embodiments of the present disclosure, the terminal receives the first message transmitted by the first core network device; where the first message carries the first differential correction value which includes at least one of the following: HRTD between a non-reference TRP and a reference TRP, RPD between a non-reference TRP and a reference TRP, time variation rate of the HRTD, or time variation rate of the RPD. In this way, the terminal can eliminate timing offset in measurement quantities based on the HRTD, thereby ensuring that the timing offset accuracy required by the positioning strategy is met. The terminal can also know an RTD at an actual positioning moment based on the time variation rate of the HRTD, thereby ensuring positioning accuracy. The terminal can also implement a double difference function based on the RPD and/or time variation rate of the RPD, thereby reducing the increased PRU load and signaling overhead caused by the terminal obtaining reference signal measurement quantities through air interface signaling to determine phase offset and/or timing offset. This solves the problems of poor positioning accuracy, heavy load on the PRU and significant signaling overhead in current positioning methods.

### BRIEF DESCRIPTION OF THE DRAWINGS

FIG. 1 is a flowchart of an information processing method on a terminal side according to an embodiment of the present disclosure;
FIG. 2 is a flowchart of an information processing method on a first core network device side according to an embodiment of the present disclosure;
FIG. 3 is a flowchart of an information processing method on a transmission and reception point side according to an embodiment of the present disclosure;
FIG. 4 is a flowchart of an information processing method on a positioning reference unit side according to an embodiment of the present disclosure;
FIG. 5 is an interaction flowchart of an information processing method according to an embodiment of the present disclosure;
FIG. 6 is a first block diagram of a terminal according to an embodiment of the present disclosure;
FIG. 7 is a second block diagram of a terminal according to an embodiment of the present disclosure;
FIG. 8 is a first block diagram of a first core network device according to an embodiment of the present disclosure;
FIG. 9 is a second block diagram of a first core network device according to an embodiment of the present disclosure;
FIG. 10 is a first block diagram of a transmission and reception point according to an embodiment of the present disclosure;
FIG. 11 is a second block diagram of a transmission and reception point according to an embodiment of the present disclosure;
FIG. 12 is a first block diagram of a positioning reference unit according to an embodiment of the present disclosure; and
FIG. 13 is a second block diagram of a positioning reference unit according to an embodiment of the present disclosure.

### DETAILED DESCRIPTION

In order to make the technical problems, the technical solutions and the advantages of the present disclosure more apparent, the present disclosure will be described hereinafter in conjunction with the drawings and embodiments. In the following descriptions, to facilitate understanding embodiments of the present disclosure, specific configurations and specific details of components are provided. Thus, persons having ordinary skill in the art should understand that, various changes and modifications may be made to the embodiments described here, without departing from scope and spirit of the present disclosure. In addition, for clarity and simplicity, descriptions about known functions and constructions are omitted.

It is to be understood that, the phrase "one embodiment" or "an embodiment" as used throughout the specification means that a particular feature, structure, or characteristic relating to an embodiment is included in at least one embodiment of the present disclosure. Thus, "in one embodiment" or "in an embodiment" as used throughout the specification does not necessarily refer to the same embodiment. In addition, these specific features, structures, or characteristics may be combined in any suitable manner in one or more embodiments.

In various embodiments of the present disclosure, it is to be understood that, the sequence numbers of the following processes do not imply the order of execution. The order of execution of each process should be determined by its function and internal logic, which should not constitute any limitation to the implementation processes of the embodiments of the application.

In addition, the terms "system" and "network" in this document are often used interchangeably.

The technical solution of the embodiment of the present disclosure may be applied to various systems, especially 5th Generation Mobile Communication Technology (5G) system. For example, applicable systems may be Global System of Mobile communication (GSM) system, Code Division Multiple Access (CDMA) system, Wideband Code Division Multiple Access (WCDMA) system, General Packet Radio Service (GPRS) system, Long Term Evolution (LTE) system, LTE frequency division duplex (FDD) system, LTE time division duplex (TDD) system, Long Term Evolution Advanced (LTE-A) system, Universal Mobile Telecommunication System (UMTS), Worldwide Interoperability for Microwave Access (WiMAX) system, or 5th-Generation (5G) New Radio (NR) system. Each of these systems includes a terminal device and a network device. Each system further includes a core network part, e.g., an Evolved Packet System (EPS) or 5G system (5GS/5GC).

Multi Input Multi Output (MIMO) transmission is performed between the network device and the terminal device each with one or more antennae, and the MIMO transmission is Single User MIMO (SU-MIMO) or Multiple User MIMO (MU-MIMO). Depending on the form of an antenna combination and the quantity of antennae, the MIMO transmission may be 2D-MIMO, 3D-MIMO, FD-MIMO or massive-MIMO, and it may also be diversity transmission, precoding transmission or beam-forming transmission.

In the embodiment of the present application, the term "and/or" describes association relationship of associated objects, indicating that there can be three relationships, for example, A and/or B means that there are three situations: there is A alone, there are both A and B, there is B alone. The character "/" generally indicates that before and after related objects are in an "or" relationship.

The term "a plurality of" in the embodiments of the present disclosure means two or more, and other quantifiers are similar.

The technical solutions in the embodiments of the present application will be clearly and completely described below with reference to the accompanying drawings in the embodiments of the present application. Obviously, the described embodiments are only some embodiments of the present application, rather than all embodiments. Based on the embodiments in the present application, all other embodiments obtained by those of ordinary skill in the art without creative efforts fall within the scope of protection of the present application.

The related technologies involved in the present disclosure are introduced hereinafter.

1. Currently, an LMF is supported to notify a target User Equipment (UE) of timing offsets between different TRPs by using RTD. However, the granularity of NR-RTD-Info information defined in the current 5G New Radio (NR) system is:
Tc=1/(480KHz*4096)=0.509ns=15.26cm, where Δ*fₘₐₓ* =480 kHz is the maximum subcarrier spacing, and *N_{f}* = 4096 is the number of Fast Fourier Transform (FFT) points.

As shown in Table 1, assistance data required for UE-based DL-TDOA and/or DL-AoD positioning methods is given.

**Table 1: Mapping of posSibType to assistanceDataElement**

| | | |
|---|---|---|
| NR DL-TDOA/DL-AoD assistance Data | posSib Type 6-1 | NR-DL-PRS assistance data |
| | posSib Type 6-2 | NR-UEB-TRP positioning data |
| | posSib Type 6-3 | NR-UEB-TRP RTD information |

For example, regarding NR-UEB-TRP RTD information (NR-UEB-TRP-RTD-Info), the IE NR-UEB-TRP-RTD-Info is used in the assistanceDataElement if the posSibType in Information Element (IE) PosSIB-Type indicates 'posSibType6-3', where the code is as follows:

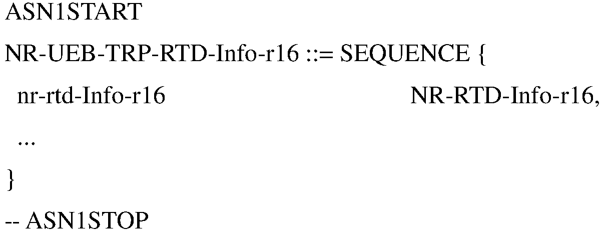

### 2. RTD information (NR-RTD-Info)

The IE NR-RTD-Info is used by the location server to provide time synchronization information between a reference TRP and a list of neighbour TRPs (or referred to as a list of non-reference TRPs). For example, codes are as follows:

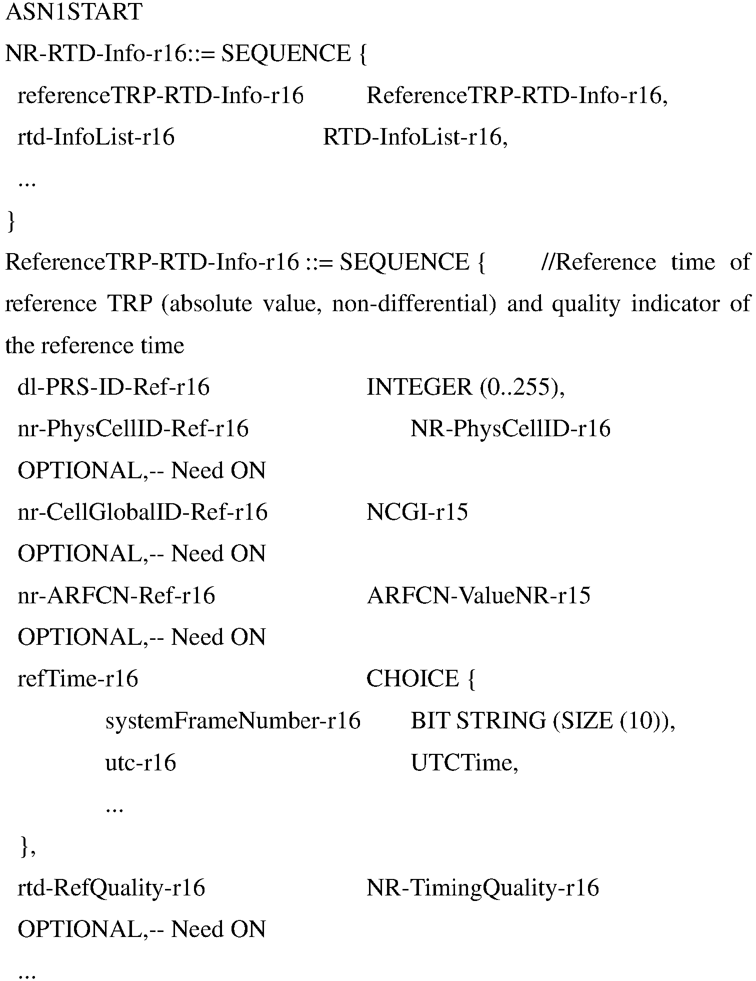

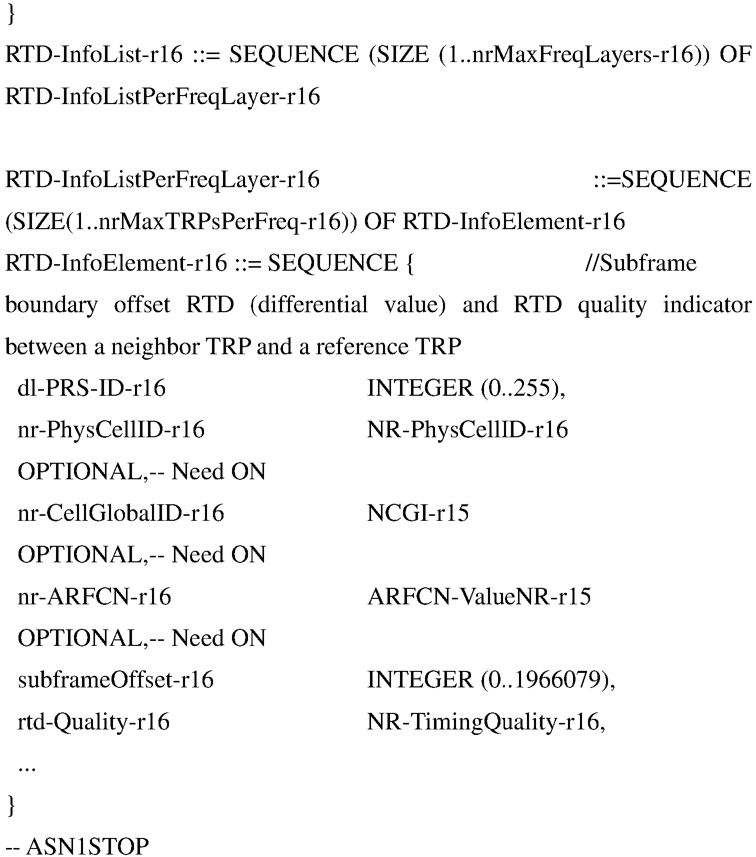

### 3. Subframe Offset (subframeOffset)

This field specifies the subframe boundary offset at the TRP antenna location between the reference TRP and this neighbour TRP in time units: *T_{c}* = *1*/*(Δfₘₐₓ · N_{f}*), where *Δfₘₐₓ=480* kHz, *N_{f}=* 4096. The offset is counted from the beginning of a subframe #0 of the reference TRP to the beginning of the closest subsequent subframe of this neighbour TRP.

The embodiments of the present disclosure provide an information processing method, a terminal, a core network device, a transmission and reception point, and a positioning reference unit, which can solve the problems of poor positioning accuracy, heavy load on the PRU and significant signaling overhead in current positioning methods. The method and the terminal (or core network device or transmission and reception point or positioning reference unit) are based on the same inventive concept. Since the method and the terminal (or core network device or transmission and reception point or positioning reference unit) solve the problem in a similar principle, implementation of the method and the terminal (or core network device or transmission and reception point or positioning reference unit) can refer to each other, and the repeated parts will not be repeated.

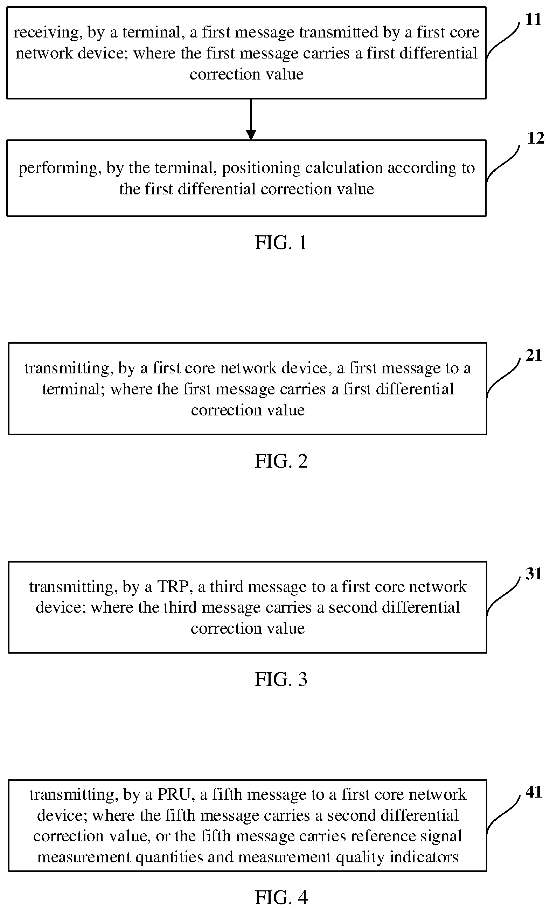

As shown in FIG. 1, one embodiment of the present disclosure provides an information processing method, including the following steps:
Step 11: receiving, by a terminal, a first message transmitted by a first core network device; where the first message carries a first differential correction value.

The first differential correction value includes at least one of the following:
a High-accuracy Relative Time Difference (HRTD) between a non-reference TRP and a reference TRP;
a Relative Phase Difference (RPD) between a non-reference TRP and a reference TRP;
time variation rate of the HRTD; or
time variation rate of the RPD.

In some embodiments, the first core network device may be an LMF network element or may also be other core network network-elements, which is not limited in the embodiments of the present disclosure.

In some embodiments, the first differential correction value may be provided by a TRP or a PRU, or determined by the first core network device based on data provided by a TRP or a PRU, which will be described in detail hereinafter in conjunction with the embodiments on the first core network device side, and the embodiments of the present disclosure are not limited thereto.

Step 12: performing, by the terminal, positioning calculation according to the first differential correction value.

For example, the terminal may eliminate phase offset and/or timing offset in measurement quantities according to the first differential correction value, and perform positioning calculation based on the measurement quantities after offset elimination.

In this embodiment, the terminal receives the first message transmitted by the first core network device; where the first message carries the first differential correction value which includes at least one of the following: HRTD between a non-reference TRP and a reference TRP, RPD between a non-reference TRP and a reference TRP, time variation rate of the HRTD, or time variation rate of the RPD. In this way, the terminal can eliminate timing offset in measurement quantities based on the HRTD, thereby ensuring that the timing offset accuracy required by the positioning strategy is met. The terminal can also know an RTD at an actual positioning moment based on the time variation rate of the HRTD, thereby ensuring positioning accuracy. The terminal can also implement a double difference function based on the RPD and/or time variation rate of the RPD, thereby reducing the increased PRU load and signaling overhead caused by the terminal obtaining reference signal measurement quantities through air interface signaling to determine phase offset and/or timing offset. This solves the problems of poor positioning accuracy, heavy load on the PRU and significant signaling overhead in current positioning methods.

In some embodiments, the first message further carries at least one of the following information:
TRP transmission Timing Error Group Identity (TEG ID);
a TRP transmission antenna identity;
an Antenna Reference Point Identity (ARP ID);
time information corresponding to the HRTD; for example, the time information may be a moment corresponding to the HRTD, i.e., a moment corresponding to the HRTD included in the first differential correction value; or,
time information corresponding to the RPD; for example, the time information may be a moment corresponding to the RPD, i.e., a moment corresponding to the RPD included in the first differential correction value.

In some embodiments, the granularity of the HRTD is smaller than *T_{c};* where *T_{c} = 1*/*(Δfₘₐₓ · N_{f}*), *Δfₘₐₓ* is the maximum subcarrier spacing, and *N_{f}* is the number of Fast Fourier Transform (FFT) points.

For example, a value range of *Δfₘₐₓ* includes but is not limited to {15 kHz, 30 kHz, 60 kHz, 120 kHz, 240 kHz, 480 kHz, 960 kHz}, for example, the maximum subcarrier spacing for a 5G NR system is 480 kHz.

For example, a value range of *N_{f}* includes but is not limited to {2048, 4096, 8192}.

In some embodiments, before the terminal receives the first message transmitted by the first core network device, the method further includes:
transmitting, by the terminal, a second message to the first core network device; where the second message carries a type of differential correction value that the terminal expects to be provided by the first core network device.

For example, the second message may be a positioning request message, or other messages besides that. For instance, by taking the CPP positioning method as an example, the second message may be referred to as a UE-based NR CPP positioning request message, which is not limited in the embodiments of the present disclosure.

In this embodiment, the terminal can inform the first core network device of the type of differential correction value that the terminal expects to be provided by the first core network device, or in other words, the type of differential correction value that the terminal needs or wants from the first core network device. That is, the terminal can request which type or types of differential correction values the first core network device should provide. In this way, the first core network device can transmit the first message to the terminal based on the type of differential correction value that the terminal expects, needs, or requests.

For example, the types of differential correction values include but are not limited to at least one of HRTD, RPD, time variation rate of the HRTD, or time variation rate of the RPD. For instance, if the terminal informs the first core network device via the second message that the type of differential correction value the terminal expects, needs, or requests the first core network device to provide is HRTD and time variation rate of the HRTD, then the first message transmitted from the first core network device to the terminal may carry a value of HRTD and a value of time variation rate of the HRTD. Of course, the embodiments of the present disclosure are not limited thereto.

In some embodiments, when the first core network device transmits the first message to the terminal, the first message may be transmitted to the terminal periodically, or the first message may be transmitted to the terminal in a non-periodic manner, which is not limited in the embodiments of the present disclosure.

In some embodiments, when the first core network device transmits the first message to the terminal, it may be transmitted as a separate, newly defined message. By taking the CPP positioning method as an example, this first message may be referred to as an NR CPP differential correction message or other types of messages, which is not limited in the embodiments of the present disclosure.

In some embodiments, the first core network device may transmit the first message to the terminal based on an existing message. For example, the first core network device may multiplex a message for transmitting positioning assistance data to carry the first differential correction value. For instance, the first differential correction value may be transmitted together with the positioning assistance data, that is, the first message carries the first differential correction value and also carries positioning assistance data. Alternatively, the first differential correction value is added to the positioning assistance data; that is, the first message carries positioning assistance data, and the positioning assistance data includes the first differential correction value. For example, by taking the UE-based positioning method as an example, the positioning assistance data is UE-based positioning assistance data.

As another example, the first core network device may multiplex a message for requesting UE capability to carry the first differential correction value, that is, the first message is used to request UE capability.

In some embodiments, the terminal performing positioning calculation according to the first differential correction value, includes:
eliminating, by the terminal, according to the first differential correction value, phase offset and/or timing offset in Reference Signal Carrier Phase Difference (RSCPD) measurement quantities, thereby obtaining a first RSCPD;
performing, by the terminal, positioning calculation according to the first RSCPD.

For example, the terminal may eliminate timing offset in RSCPD measurement quantities, according to the HRTD and/or the time variation rate of the HRTD between a non-reference TRP and a reference TRP; and/or the terminal may eliminate phase offset in RSCPD measurement quantities, according to the RPD and/or the time variation rate of the RPD between a non-reference TRP and a reference TRP, etc., thereby improving positioning accuracy.

The following describes the information processing method performed by a target UE.

At step 1, the target UE transmits a "UE-based NR CPP" positioning request information (i.e., the second message) to an LMF, where the positioning request message includes a type of differential correction value that the terminal expects the LMF to provide.

Here, "expect" can be understood as the type of differential correction value that the terminal needs or wants the first core network device to provide, or can also be referred to as the type of differential correction value that the terminal requests the first core network device to provide. For example, the types of differential correction values include but are not limited to at least one of HRTD, RPD, time variation rate of the HRTD or time variation rate of the RPD. For instance, if the terminal informs the first core network device via the second message that the type of differential correction value the terminal expects, needs, or requests the first core network device to provide is HRTD and time variation rate of the HRTD, then the first message transmitted from the first core network device to the terminal may carry a value of HRTD and a value of time variation rate of the HRTD. Of course, the embodiments of the present disclosure are not limited thereto.

At step 2, the target UE receives, from the LMF, the first message notifying the first differential correction value, and uses this first differential correction value to eliminate an initial phase offset RPD between different TRPs and an initial timing offset RTD between different TRPs included in the RSCPD measurement quantities. The target UE performs UE-based NR CPP positioning calculation based on the differential positioning measurement quantity RSCPD after offset elimination.

The terminal involved in the embodiments of the present disclosure is a device for providing voice data and/or data connectivity to a user, e.g., a handheld device having a wireless connection function, or any other processing device capable of being connected to a wireless modem. In different systems, the terminal may have different names. For example, in a 5G system, the terminal is called as User Equipment (UE). A wireless terminal communicates with one or more Core Networks (CNs) via a Radio Access Network (RAN). The wireless terminal may be a mobile terminal, e.g., a mobile phone (or cellular phone), or a computer having the mobile terminal device, e.g., a portable, pocket-sized, handheld, built-in or vehicle-mounted mobile device, which are capable of exchanging voice and/or data with the RAN. For example, the wireless terminal may be a Personal Communication Service (PCS) telephone, a cordless telephone, a Session Initiation Protocol (SIP) phone, a Wireless Local Loop (WLL) station, or a Personal Digital Assistant (PDA). In addition, the wireless terminal may also be called as system, subscriber unit, subscriber station, mobile station, mobile, remote station, access point, remote terminal, access terminal, user terminal, user agent or user device, which will not be particularly defined herein.

As shown in FIG. 2, one embodiment of the present disclosure provides an information processing method, including the following steps.

Step 21: transmitting, by a first core network device, a first message to a terminal; where the first message carries a first differential correction value, and the first differential correction value includes at least one of the following:
a High-accuracy Relative Time Difference (HRTD) between a non-reference TRP and a reference TRP;
a Relative Phase Difference (RPD) between a non-reference TRP and a reference TRP;
time variation rate of the HRTD; or
time variation rate of the RPD.

In some embodiments, the first core network device may be an LMF network element or may also be other core network network-elements, which is not limited in the embodiments of the present disclosure.

In some embodiments, the first differential correction value may be provided by a TRP or a PRU, or determined by the first core network device based on data provided by a TRP or a PRU, which will be described in detail hereinafter in conjunction with the embodiments, and the embodiments of the present disclosure are not limited thereto.

In this embodiment, the first core network device transmits the first message to the terminal; where the first message carries the first differential correction value which includes at least one of the following: HRTD between a non-reference TRP and a reference TRP, RPD between a non-reference TRP and a reference TRP, time variation rate of the HRTD, or time variation rate of the RPD. In this way, the terminal can eliminate timing offset in measurement quantities based on the HRTD, thereby ensuring that the timing offset accuracy required by the positioning strategy is met. The terminal can also know an RTD at an actual positioning moment based on the time variation rate of the HRTD, thereby ensuring positioning accuracy. The terminal can also implement a double difference function based on the RPD and/or time variation rate of the RPD, thereby reducing the increased PRU load and signaling overhead caused by the terminal obtaining reference signal measurement quantities through air interface signaling to determine phase offset and/or timing offset. This solves the problems of poor positioning accuracy, heavy load on the PRU and significant signaling overhead in current positioning methods.

In some embodiments, the first message further carries at least one of the following information:
TRP transmission Timing Error Group Identity (TRP Tx TEG ID);
a TRP transmission antenna identity;
an Antenna Reference Point Identity (ARP ID);
time information corresponding to the HRTD; for example, the time information may be a moment corresponding to the HRTD, i.e., a moment corresponding to the HRTD included in the first differential correction value; or,
time information corresponding to the RPD; for example, the time information may be a moment corresponding to the RPD, i.e., a moment corresponding to the RPD included in the first differential correction value.

In some embodiments, the granularity of the HRTD is smaller than *T_{c};* where *T_{c} = 1*/*(Δfₘₐₓ · N_{f}*), *Δfₘₐₓ* is the maximum subcarrier spacing, and *N_{f}* is the number of Fast Fourier Transform (FFT) points.

For example, a value range of *Δfₘₐₓ* includes but is not limited to {15 kHz, 30 kHz, 60 kHz, 120 kHz, 240 kHz, 480 kHz, 960 kHz}, for example, the maximum subcarrier spacing for a 5G NR system is 480 kHz.

For example, a value range of *N_{f}* includes but is not limited to {2048, 4096, 8192}.

In some embodiments, before the first core network device transmits the first message to the terminal, the method further includes:
receiving, by the first core network device, a second message transmitted by the terminal; where the second message carries a type of differential correction value that the terminal expects to be provided by the first core network device.

For example, the second message may be a positioning request message, or other messages besides that. For instance, by taking the CPP positioning method as an example, the second message may be referred to as a UE-based NR CPP positioning request message, which is not limited in the embodiments of the present disclosure.

In this embodiment, the terminal can inform the first core network device of the type of differential correction value that the terminal expects to be provided by the first core network device, or in other words, the type of differential correction value that the terminal needs or wants from the first core network device. That is, the terminal can request which type or types of differential correction values the first core network device should provide. In this way, the first core network device can transmit the first message to the terminal based on the type of differential correction value that the terminal expects, needs, or requests.

For example, the types of differential correction values include but are not limited to at least one of HRTD, RPD, time variation rate of the HRTD, or time variation rate of the RPD. For instance, if the terminal informs the first core network device via the second message that the type of differential correction value the terminal expects, needs, or requests the first core network device to provide is HRTD and time variation rate of the HRTD, then the first message transmitted from the first core network device to the terminal may carry a value of HRTD and a value of time variation rate of the HRTD. Of course, the embodiments of the present disclosure are not limited thereto.

In some embodiments, when the first core network device transmits the first message to the terminal, the first message may be transmitted to the terminal periodically, or the first message may be transmitted to the terminal in a non-periodic manner, which is not limited in the embodiments of the present disclosure.

In some embodiments, when the first core network device transmits the first message to the terminal, it may be transmitted as a separate, newly defined message. By taking the CPP positioning method as an example, this first message may be referred to as an NR CPP differential correction message or other types of messages, which is not limited in the embodiments of the present disclosure.

In some embodiments, the first core network device may transmit the first message to the terminal based on an existing message. For example, the first core network device may multiplex a message for transmitting positioning assistance data to carry the first differential correction value. For instance, the first differential correction value may be transmitted together with the positioning assistance data, that is, the first message carries the first differential correction value and also carries positioning assistance data. Alternatively, the first differential correction value is added to the positioning assistance data; that is, the first message carries positioning assistance data, and the positioning assistance data includes the first differential correction value. For example, by taking the UE-based positioning method as an example, the positioning assistance data is UE-based positioning assistance data.

As another example, the first core network device may multiplex a message for requesting UE capability to carry the first differential correction value, that is, the first message is used to request UE capability.

In some embodiments, in case that the first differential correction value is determined by the first core network device based on data provided by a TRP or a PRU, that is, before the first core network device transmits the first message to the terminal, the method further includes: determining, by the first core network device, the first differential correction value.

As one implementation, the first differential correction value is determined based on direct reporting from a TRP.

In some embodiments, the determining, by the first core network device, the first differential correction value, includes:
receiving, by the first core network device, a third message transmitted by one or more TRPs; where the third message carries a second differential correction value;
determining, by the first core network device, the first differential correction value according to the second differential correction value;
where the second differential correction value includes at least one of the following:
   a High-accuracy Relative Time Difference (HRTD) between a non-reference TRP and a reference TRP;
   a Relative Phase Difference (RPD) between a non-reference TRP and a reference TRP;
   time variation rate of the HRTD; or
   time variation rate of the RPD.

In some embodiments, the first core network device obtains the second differential correction value from one or more TRPs either periodically or on a one-time basis. In other words, the one or more TRPs may report the second differential correction value periodically, or the one or more TRPs may report the second differential correction value when a first condition is met.

For example, the one or more TRPs may each calculate a second differential correction value of that TRP relative to a reference TRP and report it to the first core network device. Specifically, the one or more TRPs may calculate the second differential correction value based on pre-stored known information, or may calculate the second differential correction value based on information obtained from measurements of PRSs transmitted between TRPs, etc., which is not limited in the embodiments of the present disclosure.

For the periodic reporting of the second differential correction value, a reporting period for the second differential correction value can be defined and configured. For reporting the second differential correction value when the first condition is met, a reporting threshold for the second differential correction value and/or measurement quality indication can be defined and configured, that is, when a certain threshold is exceeded, the TRP reports the second differential correction value; otherwise, the TRP does not report the second differential correction value.

In some embodiments, the first condition includes at least one of the following:
the HRTD is greater than a first threshold;
the RPD is greater than a second threshold;
a measurement quality indication of an RSTD is greater than a third threshold;
a measurement quality indication of an RSCPD is greater than a fourth threshold.

In some embodiments, before the first core network device receives the third message transmitted by the one or more TRPs, the method further includes:
transmitting, by the first core network device, a fourth message to the one or more TRPs; where the fourth message is used to request for obtaining the first differential correction value, and the fourth message carries information related to the reference TRP.

In this embodiment, the first core network device can transmit the fourth message to one or more TRPs to request the one or more TRPs to provide the first differential correction value. In this way, the one or more TRPs can transmit the second differential correction value to the first core network device, based on the request from the first core network device. For example, by taking the CPP positioning method as an example, the fourth message may be referred to as an NR CPP differential correction value request message, or other messages, which is not limited in the embodiments of the present disclosure.

In some embodiments, the second differential correction value reported by the one or more TRPs is used to determine the first differential correction value.

Specifically, the determining, by the first core network device, the first differential correction value according to the second differential correction value, includes:
in case that a second differential correction value is transmitted by one TRP, determining, by the first core network device, the second differential correction value as the first differential correction value;
   and/or,
in case that second differential correction values are transmitted by multiple TRPs, performing, by the first core network device, averaging or combining processing on the second differential correction values to obtain the first differential correction value.

For example, in case that the first core network device receives a second differential correction value transmitted by one TRP, or in other words, in case that only one TRP transmits the second differential correction value, this second differential correction value is the first differential correction value that the first core network device needs to provide to the terminal.

As another example, in case that the first core network device receives second differential correction values transmitted by multiple TRPs, or in other words, in case that multiple TRPs transmit the second differential correction values, the first core network device needs to further process the second differential correction values transmitted by the multiple TRPs to obtain the first differential correction value. For instance, the first core network device performs averaging or combining processing, etc., on the second differential correction values transmitted by the multiple TRPs to obtain the first differential correction value.

It is to be noted that the averaging or combining processing performed by the first core network device on the second differential correction values transmitted by multiple TRPs is to perform averaging or combining processing on second differential correction values of the same non-reference TRP relative to the reference TRP. For example, the first core network device may perform averaging or combining processing on second differential correction values of TRP 1 transmitted by multiple TRPs relative to the reference TRP.

As another implementation, the first differential correction value is determined based on direct reporting from a PRU.

In some embodiments, the determining, by the first core network device, the first differential correction value, includes:
receiving, by the first core network device, a fifth message transmitted by one or more PRUs; where the fifth message carries a second differential correction value;
determining, by the first core network device, the first differential correction value according to the second differential correction value;
where the second differential correction value includes at least one of the following:
   a High-accuracy Relative Time Difference (HRTD) between a non-reference TRP and a reference TRP;
   a Relative Phase Difference (RPD) between a non-reference TRP and a reference TRP;
   time variation rate of the HRTD; or
   time variation rate of the RPD.

In some embodiments, the first core network device obtains the second differential correction value from one or more TRPs either periodically or on a one-time basis.

For example, one or multiple PRUs measure downlink PRSs from different TRPs within the same time window to obtain reference signal measurement quantities and measurement quality indicators. The reference signal measurement quantities include: RSTD measurement quantities and/or RSCPD measurement quantities; the measurement quality indicators include: measurement quality indicators of RSTD and/or measurement quality indicators of RSCPD. The PRU judges, via the measurement quality indicators, whether the quality of the RSTD and RSCPD measurement quantities meets an accuracy requirement for the differential correction value; if it meets the requirement, the PRU performs a difference operation between the RSTD measurement quantities and ideal RSTD values to obtain HRTD, and/or performs a difference operation between the RSCPD measurement quantities and ideal RSCPD values to obtain RPD. Alternatively, the PRU may also obtain a time variation rate of the HRTD and/or RPD via RTD and/or RPD at different moments, i.e., obtaining the second differential correction value. If the requirement is not met, the PRU discards the current RSTD and RSCPD measurement quantities.

In some embodiments, before the first core network device receives the fifth message transmitted by the one or more PRUs, the method further includes:
transmitting, by the first core network device, a sixth message to the one or more PRUs; where the sixth message is used to request for obtaining the first differential correction value, and the sixth message carries information related to the reference TRP.

In this embodiment, the first core network device can transmit the sixth message to one or more PRUs to request the one or more PRUs to provide the first differential correction value. In this way, the one or more PRUs can transmit the second differential correction value to the first core network device, based on the request from the first core network device. For example, by taking the CPP positioning method as an example, the sixth message may be referred to as an NR CPP differential correction value request message, or other messages, which is not limited in the embodiments of the present disclosure.

In some embodiments, the second differential correction value reported by the one or more PRUs is used to determine the first differential correction value.

Specifically, the determining, by the first core network device, the first differential correction value according to the second differential correction value, includes:
in case that a second differential correction value is transmitted by one TRP or one PRU, determining, by the first core network device, the second differential correction value as the first differential correction value;
   and/or,
in case that second differential correction values are transmitted by multiple TRPs or multiple PRUs, performing, by the first core network device, averaging or combining processing on the second differential correction values to obtain the first differential correction value.

For example, in case that the first core network device receives a second differential correction value transmitted by one PRU, or in other words, in case that only one PRU transmits the second differential correction value, this second differential correction value is the first differential correction value that the first core network device needs to provide to the terminal.

As another example, in case that the first core network device receives second differential correction values transmitted by multiple PRUs, or in other words, in case that multiple PRUs transmit the second differential correction values, the first core network device needs to further process the second differential correction values transmitted by the multiple PRUs to obtain the first differential correction value. For instance, the first core network device performs averaging or combining processing, etc., on the second differential correction values transmitted by the multiple PRUs to obtain the first differential correction value.

It is to be noted that the averaging or combining processing performed by the first core network device on the second differential correction values transmitted by multiple PRUs is to perform averaging or combining processing on second differential correction values of the same non-reference TRP relative to the reference TRP. For example, the first core network device may perform averaging or combining processing on second differential correction values of TRP 1 transmitted by multiple PRUs relative to the reference TRP.

As yet another implementation: the first differential correction value is determined based on indirect reporting from a PRU.

In some embodiments, the determining, by the first core network device, the first differential correction value, includes:
receiving, by the first core network device, a fifth message transmitted by one or more PRUs; where the fifth message carries reference signal measurement quantities and measurement quality indicators;
in case that the measurement quality indicators meet a differential correction accuracy requirement, determining, by the first core network device, the first differential correction value according to the reference signal measurement quantities.

In some embodiments, the first core network device obtains the reference signal measurement quantities and measurement quality indicators from one or more PRUs either periodically or on a one-time basis.

For example, one or multiple PRUs measure downlink PRSs from different TRPs within the same time window to obtain reference signal measurement quantities and measurement quality indicators, and report them to the first core network device.

In some embodiments, the reference signal measurement quantities include: RSTD measurement quantities, and/or, RSCPD measurement quantities; in some embodiments, the measurement quality indicators include: measurement quality indicators of RSTD, and/or, measurement quality indicators of RSCPD.

For example, the first core network device receives reference signal measurement quantities and measurement quality indicators transmitted by one or more PRUs, and judges, via the measurement quality indicators, whether the quality of the current RSTD and RSCPD measurement quantities meets the differential correction value accuracy requirement; if it meets the requirement, the first core network device determines the first differential correction value according to the reference signal measurement quantities; otherwise, if it does not meet the requirement, the RSTD and RSCPD measurement quantities are discarded.

In some embodiments, the determining, by the first core network device, the first differential correction value according to the reference signal measurement quantities, includes:
processing, by the first core network device, the reference signal measurement quantities to obtain a second differential correction value;
in case that the reference signal measurement quantities are transmitted by one PRU, determining, by the first core network device, the second differential correction value as the first differential correction value; and/or, in case that the reference signal measurement quantities are transmitted by multiple PRUs, performing, by the first core network device, averaging or combining processing on the second differential correction values corresponding to the multiple PRUs to obtain the first differential correction value.

For example, in case that the first core network device receives reference signal measurement quantities transmitted by one PRU, or in other words, if only one PRU transmits the reference signal measurement quantities, the second differential correction value obtained by the first core network device based on processing the reference signal measurement quantities transmitted by this one PRU is the first differential correction value that the first core network device needs to provide to the terminal.

As another example, in case that the first core network device receives reference signal measurement quantities transmitted by multiple PRUs, or in other words, in case that multiple PRUs transmit the reference signal measurement quantities, the first core network device needs to further process the second differential correction values obtained by processing the reference signal measurement quantities transmitted by the multiple PRUs to obtain the first differential correction value. For instance, the first core network device performs averaging or combining processing, etc., on the second differential correction values obtained by processing the reference signal measurement quantities transmitted by the multiple PRUs to obtain the first differential correction value.

It is to be noted that the averaging or combining processing performed by the first core network device on the second differential correction values obtained by processing the reference signal measurement quantities transmitted by multiple PRUs is to perform averaging or combining processing on the second differential correction values for the same non-reference TRP relative to the reference TRP. For example, the first core network device performs averaging or combining processing, etc., on the second differential correction values for TRP 1 obtained by processing the reference signal measurement quantities transmitted by multiple PRUs relative to the reference TRP.

In some embodiments, the first core network device processing the reference signal measurement quantities to obtain the second differential correction value includes at least one of the following:
performing, by the first core network device, a difference operation between an RSTD measurement quantity and an ideal RSTD value to obtain an HRTD;
performing, by the first core network device, a difference operation between an RSCPD measurement quantity and an ideal RSCPD value to obtain an RPD;
determining, by the first core network device, a time variation rate of HRTD according to HRTDs at different moments;
determining, by the first core network device, a time variation rate of RPD according to RPDs at different moments.

For example, when the first core network device receives reference signal measurement quantities and measurement quality indicators transmitted by one or more PRUs, in case that it is judged via an RSTD measurement quality indicator that the quality of the current RSTD measurement quantity meets the differential correction value accuracy requirement, the first core network device performs a difference operation between the RSTD measurement quantity and an ideal RSTD value to obtain HRTD, and/or determines a time variation rate of the HRTD according to HRTDs at different moments. Or, if the differential correction value accuracy requirement is not met, the RSTD measurement quantity is discarded.

As another example, when the first core network device receives reference signal measurement quantities and measurement quality indicators transmitted by one or more PRUs, in case that it is judged via an RSCPD measurement quality indicator that the quality of the current RSCPD measurement quantity meets the differential correction value accuracy requirements, the first core network device performs a difference operation between the RSCPD measurement quantity and an ideal RSCPD value to obtain RPD, and/or determines a time variation rate of the RPD according to RPDs at different moments. Or, if the differential correction value accuracy requirement is not met, the RSCPD measurement quantity is discarded.

In some embodiments, before the first core network device receives the fifth message transmitted by the one or more PRUs, the method further includes:
transmitting, by the first core network device, a sixth message to the one or more PRUs; where the sixth message is used to request for obtaining the first differential correction value, and the sixth message carries information related to the reference TRP.

In this embodiment, the first core network device can transmit a sixth message to one or more PRUs to request the one or more PRUs to provide the first differential correction value. In this way, the one or more PRUs can transmit the second differential correction value to the first core network device, based on the request from the first core network device. For example, by taking the CPP positioning method as an example, the sixth message may be referred to as an NR CPP differential correction value request message, or other messages, which is not limited in the embodiments of the present disclosure.

In some embodiments, the first core network device may transmit the sixth message to the one or more PRUs, before, after, or simultaneously with transmission of a downlink positioning assistance data message.

By taking the first core network device being an LMF as an example, the following describes the process of the information processing method executed by the LMF.

At step 1, the LMF receives a "UE-based NR CPP" positioning request information (i.e., the second message) transmitted by a target UE, where the positioning request message includes "NR CPP differential correction value" (i.e., the type of differential correction value) that the target UE expects the LMF to provide.

Here, "expect" can be understood as the type of differential correction value that the terminal needs or wants the first core network device to provide, or can also be referred to as the type of differential correction value that the terminal requests the first core network device to provide. For example, the types of differential correction values include but are not limited to at least one of HRTD, RPD, time variation rate of the HRTD or time variation rate of the RPD. For instance, if the terminal informs the first core network device via the second message that the type of differential correction value the terminal expects, needs, or requests the first core network device to provide is HRTD and time variation rate of the HRTD, then the first message transmitted from the first core network device to the terminal may carry a value of HRTD and a value of time variation rate of the HRTD. Of course, the embodiments of the present disclosure are not limited thereto.

At step 2, the LMF transmits an "NR CPP differential correction value" request message (i.e., the fourth message) to one or more TRPs, and/or transmits an "NR CPP differential correction value" request message (i.e., the sixth message) to one or more PRUs (or reference UEs), where the request message includes information related ro a reference TRP. The request message may be transmitted before, after, or simultaneously with transmission of a downlink positioning assistance data message to the PRU.

At step 3, the LMF obtains a first differential correction value in one of the following three ways.

The first differential correction value includes at least one of the following:
an HRTD between a non-reference TRP and a reference TRP;
an RPD between the non-reference TRP and the reference TRP;
a time variation rate of the HRTD;
time variation rate of the RPD.

The first way is based on direct reporting from a TRP, that is, the LMF receives a second differential correction value reported by one TRP and determines it as the first differential correction value. Or, the LMF receives second differential correction values reported by multiple TRPs and further processes them to obtain the first differential correction value.

The second differential correction values reported by the multiple TRPs may be calculated based on pre-stored known information, or may be calculated based on information obtained from measurements of PRSs transmitted between TRPs. The reporting manner for the second differential correction values includes: periodic reporting and/or reporting in a non-periodic manner. For periodic reporting, a reporting period for the second differential correction value needs to be defined and configured. For reporting in the non-periodic manner, a reporting threshold for the second differential correction value and/or measurement quality indicator can be defined and configured, that is, when the second differential correction value and/or measurement quality indicator exceeds a certain threshold, the TRP reports the second differential correction value; otherwise, the TRP does not report the second differential correction value.

The second way is based on direct reporting from a PRU, that is, the LMF receives a second differential correction value reported by one PRU and determines it as the first differential correction value. Or, the LMF receives second differential correction values reported by multiple PRUs and further processes them to obtain the first differential correction value.

The third way is based on indirect reporting from a PRU; that is, the LMF receives RSTD and RSCPD measurement quantities and measurement quality indicators reported by one or more PRUs.

At step 4, the LMF notifies the target UE of the first differential correction value.

The first message by which the LMF notifies the target UE of the first differential correction value may be carried by UE-based positioning assistance data, or carried by a message which carries UE-based positioning assistance data, or carried by a positioning request message, or carried by a newly defined message, etc. For example, the first message may be broadcast, or unicast, or multicast, etc. The first message may be transmitted periodically or a non-periodic manner.

As shown in FIG. 3, one embodiment of the present disclosure provides an information processing method, including the following steps:
Step 31: transmitting, by a TRP, a third message to a first core network device; where the third message carries a second differential correction value.

The second differential correction value includes at least one of the following:
a High-accuracy Relative Time Difference (HRTD) between a non-reference TRP and a reference TRP;
a Relative Phase Difference (RPD) between a non-reference TRP and a reference TRP;
time variation rate of the HRTD; or
time variation rate of the RPD.

In some embodiments, the first core network device may be an LMF network element or may also be other core network network-elements, which is not limited in the embodiments of the present disclosure.

In some embodiments, the second differential correction value reported by the TRP to the first core network device is used to determine a first differential correction value, details of which can refer to the embodiments on the first core network device side and are not repeated here.

In some embodiments, the granularity of the HRTD is smaller than *T_{c};* where *T_{c} = 1*/*(Δfₘₐₓ · N_{f}*), *Δfₘₐₓ* is the maximum subcarrier spacing, and *N_{f}* is the number of Fast Fourier Transform (FFT) points.

For example, a value range of *Δfₘₐₓ* includes but is not limited to {15 kHz, 30 kHz, 60 kHz, 120 kHz, 240 kHz, 480 kHz, 960 kHz}, for example, the maximum subcarrier spacing for a 5G NR system is 480 kHz.

For example, a value range of *N_{f}* includes but is not limited to {2048, 4096, 8192}.

In some embodiments, before transmitting, by a TRP, a third message to a first core network device, the method further includes:
receiving, by the TRP, a fourth message transmitted by the first core network device; where the fourth message is used to request for obtaining the first differential correction value, and the fourth message carries information related to the reference TRP.

In this embodiment, the first core network device can transmit the fourth message to one or more TRPs to request the one or more TRPs to provide the first differential correction value. In this way, the one or more TRPs can transmit the second differential correction value to the first core network device, based on the request from the first core network device. For example, by taking the CPP positioning method as an example, the fourth message may be referred to as an NR CPP differential correction value request message, or other messages, which is not limited in the embodiments of the present disclosure.

In some embodiments, the transmitting, by a TRP, a third message to a first core network device, includes:
transmitting, by the TRP, the third message to the first core network device in a periodic manner;
   or,
in case that a first condition is satisfied, transmitting, by the TRP, the third message to the first core network device;
where the first condition includes at least one of the following:
   the HRTD is greater than a first threshold;
   the RPD is greater than a second threshold;
   a measurement quality indication of an RSTD is greater than a third threshold;
   a measurement quality indication of an RSCPD is greater than a fourth threshold.

In some embodiments, the first core network device obtains the second differential correction value from one or more TRPs either periodically or on a one-time basis. In other words, the one or more TRPs may report the second differential correction value periodically, or the one or more TRPs may report the second differential correction value when the first condition is met.

For example, the one or more TRPs may each calculate a second differential correction value of that TRP relative to a reference TRP and report it to the first core network device. Specifically, the one or more TRPs may calculate the second differential correction value based on pre-stored known information, or may calculate the second differential correction value based on information obtained from measurements of PRSs transmitted between TRPs, etc., which is not limited in the embodiments of the present disclosure.

For the periodic reporting of the second differential correction value, a reporting period for the second differential correction value can be defined and configured. For reporting the second differential correction value when the first condition is met, a reporting threshold for the second differential correction value and/or measurement quality indication can be defined and configured, that is, when a certain threshold is exceeded, the TRP reports the second differential correction value; otherwise, the TRP does not report the second differential correction value.

In the embodiments of the present disclosure, the TRP transmits the third message carrying the second differential correction value to the first core network device. The first core network device determines a first differential correction value according to the second differential correction value and transmits the first message to the terminal; where the first message carries the first differential correction value which includes at least one of the following: HRTD between a non-reference TRP and a reference TRP, RPD between a non-reference TRP and a reference TRP, time variation rate of the HRTD, or time variation rate of the RPD. In this way, the terminal can eliminate timing offset in measurement quantities based on the HRTD, thereby ensuring that the timing offset accuracy required by the positioning strategy is met. The terminal can also know an RTD at an actual positioning moment based on the time variation rate of the HRTD, thereby ensuring positioning accuracy. The terminal can also implement a double difference function based on the RPD and/or time variation rate of the RPD, thereby reducing the increased PRU load and signaling overhead caused by the terminal obtaining reference signal measurement quantities through air interface signaling to determine phase offset and/or timing offset. This solves the problems of poor positioning accuracy, heavy load on the PRU and significant signaling overhead in current positioning methods.

The following describes the information processing method performed by a PRU.

At step 1, the TRP receives a "first differential correction value request" message (i.e., the fourth message) from the LMF and calculates a second differential correction value. The request message includes information related to a reference TRP. The calculation of the second differential correction values by multiple TRPs can be based on pre-stored known information or information obtained from measurements of PRSs transmitted between TRPs.

At step 2, the TRP directly reports the second differential correction value to the LMF. The reporting manner for the second differential correction value includes: periodic reporting and/or reporting in a non-periodic manner. For periodic reporting, a reporting period for the second differential correction value needs to be defined and configured. For reporting in the non-periodic manner, a reporting threshold for the second differential correction value and/or measurement quality indicator can be defined and configured, that is, when the second differential correction value and/or measurement quality indicator exceeds a certain threshold, the TRP reports the second differential correction value; otherwise, the TRP does not report the second differential correction value.

At step 3, the TRP transmits a downlink PRS signal to the PRU and the target UE.

In some embodiments, the TRP may be a base station, or one base station may correspond to one or more TRPs.

The base station involved in the embodiments of the present disclosure may include one or more cells providing services for the terminal. Depending on different application scenarios, the base station is called as an access point, a device in an access network in communication with the wireless terminal device through one or more sectors on an air interface, and may also be called other names. The base station may be used to exchange a received air frame with an Internet Protocol (IP) packet, and it serves as a router between the wireless terminal device and the other part of the access network. The other part of the access network includes an IP communication network. The base station may further coordinate attribute management on the air interface. For example, the base station involved in the embodiments of the present disclosure is a Base Transceiver Station (BTS) in the Global System for Mobile communications (GSM) or Code Division Multiple Access (CDMA) system, a NodeB in the Wide-band Code Division Multiple Access (WCDMA) system, an evolutional Node B (eNB, or e-NodeB) in the LTE system, a 5G base station (gNB) in 5G network architecture (next generation system), a Home evolved Node B (HeNB), a relay node, a femto, or a pico, which will not be particularly defined herein. In some network architectures, the network device may include a Centralized Unit (CU) node and a Distributed Unit (DU) node, and the centralized unit and distributed unit may also be geographically separated.

As shown in FIG. 4, one embodiment of the present disclosure provides an information processing method, including the following steps:
Step 41: transmitting, by a PRU, a fifth message to a first core network device; where the fifth message carries a second differential correction value, or the fifth message carries reference signal measurement quantities and measurement quality indicators;
where the second differential correction value includes at least one of the following:
   a High-precision Relative Time Difference (HRTD) between a non-reference TRP and a reference TRP;
   a Relative Phase Difference (RPD) between a non-reference TRP and a reference TRP;
   a time variation rate of the HRTD;
   time variation rate of the RPD.

In some embodiments, the first core network device may be an LMF network element or may also be other core network network-elements, which is not limited in the embodiments of the present disclosure.

In some embodiments, the second differential correction value is used to determine a first differential correction value; or, the reference signal measurement quantities and measurement quality indicators are used to determine a first differential correction value.

In some embodiments, the reference signal measurement quantities include: RSTD measurement quantities, and/or, RSCPD measurement quantities;
and/or,
the measurement quality indicators include: measurement quality indicators of RSTD, and/or, measurement quality indicators of RSCPD.

In some embodiments, the granularity of the HRTD is smaller than *T_{c}*; where *T_{c} =* 1/(Δ*fₘₐₓ · N_{f}*), Δ*fₘₐₓ* is the maximum subcarrier spacing, and *N_{f}* is the number of Fast Fourier Transform (FFT) points.

For example, a value range of Δ*fₘₐₓ* includes but is not limited to {15 kHz, 30 kHz, 60 kHz, 120 kHz, 240 kHz, 480 kHz, 960 kHz}, for example, the maximum subcarrier spacing for a 5G NR system is 480 kHz.

For example, a value range of *N_{f}* includes but is not limited to {2048, 4096, 8192}.

In some embodiments, before transmitting, by a PRU, a fifth message to a first core network device, the method further includes:
receiving, by the PRU, a sixth message transmitted by the first core network device; where the sixth message is used to request for obtaining the first differential correction value, and the sixth message carries information related to the reference TRP.

In this embodiment, the first core network device can transmit the sixth message to one or more PRUs to request the one or more PRUs to provide the first differential correction value. In this way, the one or more PRUs can transmit the second differential correction value to the first core network device, based on the request from the first core network device. For example, by taking the CPP positioning method as an example, the sixth message may be referred to as an NR CPP differential correction value request message, or other messages, which is not limited in the embodiments of the present disclosure.

In some embodiments, the transmitting, by a PRU, a fifth message to a first core network device, includes:
measuring, by the PRU, a positioning reference signal (PRS) transmitted by a TRP to obtain the reference signal measurement quantities and measurement quality indicators;
transmitting, by the PRU, the fifth message to the first core network device; where the fifth message carries the reference signal measurement quantities and measurement quality indicators.

For example, one or multiple PRUs measure downlink PRSs from different TRPs within the same time window to obtain reference signal measurement quantities and measurement quality indicators, and report them to the first core network device.

In some embodiments, the transmitting, by a PRU, a fifth message to a first core network device, includes:
measuring, by the PRU, a positioning reference signal (PRS) transmitted by a TRP to obtain the reference signal measurement quantities and measurement quality indicators;
in case that the measurement quality indicators meet differential correction accuracy requirement, processing, by the PRU, the reference signal measurement quantities to obtain the second differential correction value;
transmitting, by the PRU, the fifth message to the first core network device; where the fifth message carries the second differential correction value.

In some embodiments, the PRU processing the reference signal measurement quantities to obtain the second differential correction value includes at least one of the following:
performing, by the PRU, a difference operation between an RSTD measurement quantity and an ideal RSTD value to obtain an HRTD;
performing, by the PRU, a difference operation between an RSCPD measurement quantity and an ideal RSCPD value to obtain an RPD;
determining, by the f PRU, a time variation rate of HRTD according to HRTDs at different moments;
determining, by the PRU, a time variation rate of RPD according to RPDs at different moments.

For example, one or multiple PRUs measure downlink PRSs from different TRPs within the same time window to obtain reference signal measurement quantities and measurement quality indicators. The reference signal measurement quantities include: RSTD measurement quantities and/or RSCPD measurement quantities; the measurement quality indicators include: measurement quality indicators of RSTD and/or measurement quality indicators of RSCPD. The PRU judges, via the measurement quality indicators, whether the quality of the RSTD and RSCPD measurement quantities meets the differential correction value accuracy requirement; if it meets the requirements, the PRU performs a difference operation between the RSTD measurement quantities and ideal RSTD values to obtain HRTD, and/or performs a difference operation between the RSCPD measurement quantities and ideal RSCPD values to obtain RPD. Alternatively, the PRU may also obtain a time variation rate of the HRTD and/or RPD via RTD and/or RPD at different moments, i.e., obtaining the second differential correction value. If the requirement is not met, the PRU discards the current RSTD and RSCPD measurement quantities.

In the embodiments of the present disclosure, the PRU transmits a fifth message carrying a second differential correction value or carrying reference signal measurement quantities and measurement quality indicators to the first core network device. The first core network device determines a first differential correction value according to the second differential correction value, or the reference signal measurement quantities and measurement quality indicators, and transmits a first message to the terminal; where the first message carries the first differential correction value which includes at least one of the following: HRTD between a non-reference TRP and a reference TRP, RPD between a non-reference TRP and a reference TRP, time variation rate of the HRTD, or time variation rate of the RPD. In this way, the terminal can eliminate timing offset in measurement quantities based on the HRTD, thereby ensuring that the timing offset accuracy required by the positioning strategy is met. The terminal can also know an RTD at an actual positioning moment based on the time variation rate of the HRTD, thereby ensuring positioning accuracy. The terminal can also implement a double difference function based on the RPD and/or time variation rate of the RPD, thereby reducing the increased PRU load and signaling overhead caused by the terminal obtaining reference signal measurement quantities through air interface signaling to determine phase offset and/or timing offset. This solves the problems of poor positioning accuracy, heavy load on the PRU and significant signaling overhead in current positioning methods.

The following describes the information processing method performed by a PRU.

At step 1, the PRU (or reference UE) receives a "first differential correction value request" message (i.e., the sixth message) from the LMF, where the request message includes information related to a reference TRP. The message may be transmitted before, after, or simultaneously with transmission of a downlink positioning assistance data message.

At step 2, multiple PRUs measure downlink PRS signals from different TRPs within the same time window notified by the LMF, obtain RSTD and RSCPD measurement quantities and measurement quality indicators, further calculate HRTD and RPD, and then obtain the time variation rates of HRTD and RPD via RTD and RPD at different moments.

In some embodiments, the PRU judges, via the measurement quality indicators, whether the quality of the current RSTD and RSCPD measurement quantities meets an accuracy requirement for the "NR CPP differential correction value".

If it meets the requirement, the PRU performs a difference operation between the RSTD and RSCPD measurement quantities and ideal RSTD and RSCPD values to obtain HRTD and RPD, and obtains time variation rates of HRTD and RPD via RTD and RPD at different moments. Then the step 3 is performed.

If it does not meet the requirement, the PRU discards the current RSTD and RSCPD measurement quantities.

At step 3, the PRU reports the second differential correction value to the LMF in a direct reporting manner or indirect reporting manner, or reports reference signal measurement quantities and measurement quality indicators for calculating the first differential correction value.

For the direct reporting manner, one or multiple PRUs report the second differential correction value to the LMF.

For the indirect reporting manner, one or multiple PRUs report the RSTD and RSCPD measurement quantities and measurement quality indicators to the LMF.

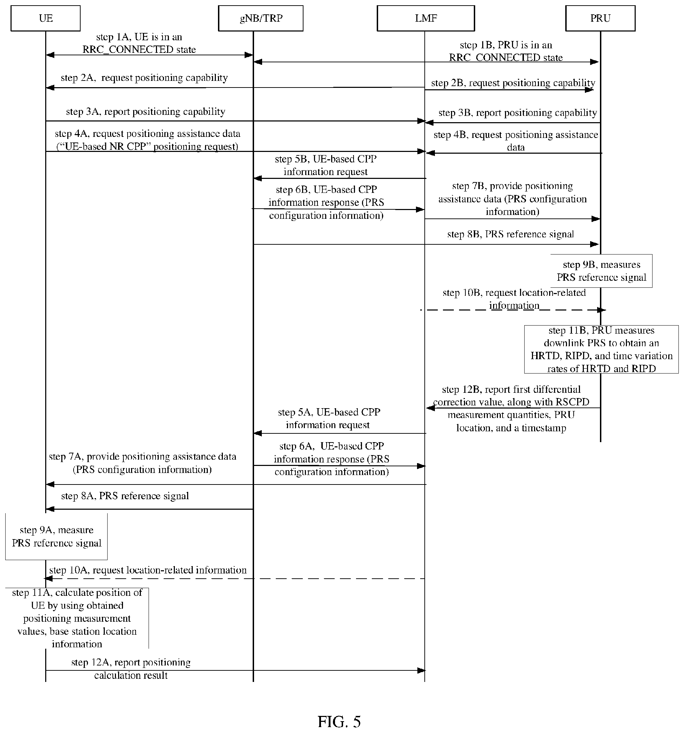

As shown in FIG. 5, an interaction flowchart of an information processing method is provided, which specifically includes:
At step 1A, UE is in an RRC_CONNECTED state;
At step 1B, PRU is in an RRC_CONNECTED state;
At step 2A, LMF requests positioning capability from the UE;
At step 2B, LMF requests positioning capability from the PRU;
At step 3A, the UE reports its positioning capability;
At step 3B, the PRU reports its positioning capability;
At step 4A, the UE requests positioning assistance data ("UE-based NR CPP" positioning request) from the LMF;
At step 4B, the PRU requests positioning assistance data from the LMF;
At step 5B, the LMF transmits a UE-based CPP information request to the gNB/TRP;
At step 6B, the gNB/TRP transmits a UE-based CPP information response (PRS configuration information) to the LMF.
At step 7B, the LMF provides positioning assistance data (PRS configuration information) to the PRU;
At step 8B, the gNB/TRP transmits a PRS reference signal;
At step 9B, the PRU measures the PRS reference signal;
At step 10B, the LMF requests location-related information from the PRU;
At step 11B, the PRU measures the downlink PRS to obtain an HRTD, RIPD, and time variation rates of HRTD and RIPD;
At step 12B, the PRU reports a first differential correction value, along with RSCPD measurement quantities, PRU location, and a timestamp;
At step 5A, the LMF transmits a UE-based CPP information request to the gNB/TRP;
At step 6A, the gNB/TRP transmits a UE-based CPP information response (PRS configuration information) to the LMF;
At step 7A, the LMF provides positioning assistance data (PRS configuration information) to the UE;
At step 8A, the gNB/TRP transmits a PRS reference signal;
At step 9A, the UE measures the PRS reference signal;
At step 10A, location-related information is requested from the UE;
At step 11A, the UE calculates its own position by using the obtained positioning measurement values, base station location information, and other relevant data;
At step 12A, the UE reports a positioning calculation result.

The following describes the interaction process of the information processing method of the present disclosure in conjunction with specific embodiments.

### Embodiment 1

### Regarding the LMF side

At step 1, the LMF receives a "UE-based NR CPP" positioning request information (i.e., the second message) transmitted by a target UE, where the positioning request message includes "NR CPP differential correction value" (i.e., the type of differential correction value) that the target UE expects the LMF to provide.

Here, "expect" can be understood as the type of differential correction value that the terminal needs or wants the first core network device to provide, or can also be referred to as the type of differential correction value that the terminal requests the first core network device to provide. For example, the types of differential correction values include but are not limited to at least one of HRTD, RPD, time variation rate of the HRTD or time variation rate of the RPD. For instance, if the terminal informs the first core network device via the second message that the type of differential correction value the terminal expects, needs, or requests the first core network device to provide is HRTD and time variation rate of the HRTD, then the first message transmitted from the first core network device to the terminal may carry a value of HRTD and a value of time variation rate of the HRTD. Of course, the embodiments of the present disclosure are not limited thereto.

At step 2, the LMF transmits an "NR CPP differential correction value" request message (i.e., the fourth message) to one or more TRPs, and/or transmits an "NR CPP differential correction value" request message (i.e., the sixth message) to one or more PRUs (or reference UEs), where the request message includes information related to a reference TRP. The request message may be transmitted before, after, or simultaneously with transmission of a downlink positioning assistance data message to the PRU.

At step 3, the LMF obtains a first differential correction value through the following first way.

The first differential correction value includes at least one of the following:
an HRTD between a non-reference TRP and a reference TRP;
an RPD between the non-reference TRP and the reference TRP;
a time variation rate of the HRTD;
time variation rate of the RPD.

The first way is based on direct reporting from a TRP, that is, the LMF receives a second differential correction value reported by one TRP and determines it as the first differential correction value. Or, the LMF receives second differential correction values reported by multiple TRPs and further processes them to obtain the first differential correction value.

The second differential correction values reported by the multiple TRPs may be calculated based on pre-stored known information, or may be calculated based on information obtained from measurements of PRSs transmitted between TRPs. The reporting manner for the second differential correction values includes: periodic reporting and/or reporting in a non-periodic manner. For periodic reporting, a reporting period for the second differential correction value needs to be defined and configured. For reporting in the non-periodic manner, a reporting threshold for the second differential correction value and/or measurement quality indicator can be defined and configured, that is, when the second differential correction value and/or measurement quality indicator exceeds a certain threshold, the TRP reports the second differential correction value; otherwise, the TRP does not report the second differential correction value.

At step 4, the LMF notifies the target UE of the first differential correction value.

The first message by which the LMF notifies the target UE of the first differential correction value may be carried by UE-based positioning assistance data, or carried by a message which carries UE-based positioning assistance data, or carried by a positioning request message, or carried by a newly defined message, etc. For example, the first message may be broadcast, or unicast, or multicast, etc. The first message may be transmitted periodically or a non-periodic manner.

In some embodiments, the resolution of RTD is improved in the positioning assistance data notified by the LMF to the target UE. For example, a basic unit for updating RTD is Tc/RATIO, where RATIO is a positive integer greater than or equal to 2, and RATIO may be predefined or configurable.

It is to be noted that at least one PRU estimates a TOA difference between different TRPs, compares it with the theoretical TOA difference, calculates a timing offset (i.e., RTD) between different TRPs, and then the PRU reports the RTD to the LMF. If multiple PRUs perform reporting, the LMF obtains the RTD by averaging RTD values reported by multiple PRUs and notifies the target UE of the obtained RTD. The corresponding codes are as follows:

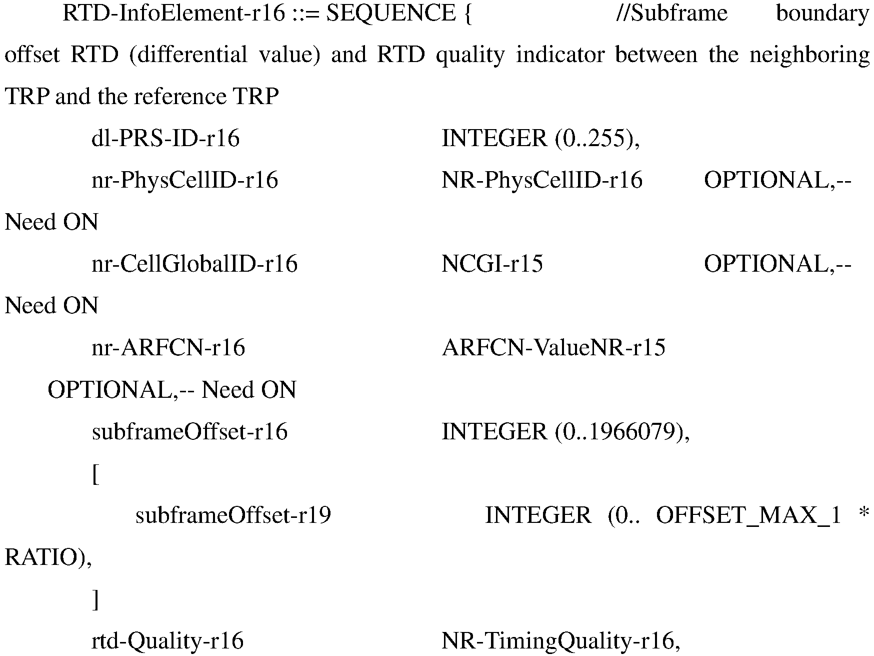

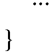

Alternatively, in some embodiments, a new initial phase offset RPD between different TRPs is added to the positioning assistance data notified by the LMF to the target UE. In some embodiments, time-variability of RPD may also be included, for example, the time variation rate of the RPD.

The PRU simultaneously tracks a difference in carrier phase measurements (RSCP) of two TRPs, compares it with the theoretical RSCP phase difference, thereby obtaining the RPD.

The above positioning assistance data does not require absolute initial phase information of the reference TRP, but only requires initial phase difference information between the reference TRP and the neighbor TRP (i.e., a differential value of initial phases between different TRPs), for example, RPD=InitialPhase (TRP_n)-InitialPhase (TRP_ref), where InitialPhase (TRP_ref) represents an initial phase value of the reference TRP, and InitialPhase (TRP_n) represents an initial phase value of the neighbor TRP.

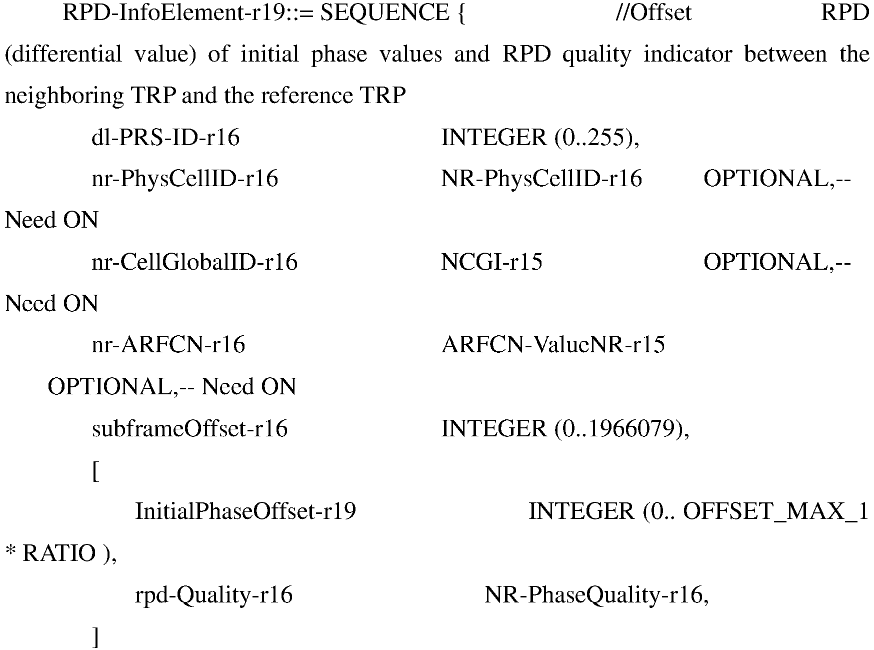

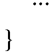

Alternatively, in some embodiments, a broadcast notification period T for RTD can be selected from values including 80ms, 160ms, 320ms, 640ms, 1280ms, 2560ms, and 5120ms. Within duration of the notification period T, it is further necessary to consider time-varying nature of timing offsets caused by crystal oscillators of the UE and the base station, and the following three methods are considered:

Method 1: adding time variation rates of timing offset RTD and RPD to the positioning assistance data notified by the LMF to the target UE, such as RTD_Rate, RPD_rate.

Method 2: based on an allowed positioning error range (e.g., error within 10% cycle, and crystal oscillator frequency offset of TRP), the UE or LMF requests the serving base station to adjust the broadcast period T for RTD/RPD. For example, the UE/LMF requests, on-demand, the serving base station to adjust the notification period T for RTD/RPD, or triggers the serving base station to adjust the notification period T for RTD/RPD based on an event.

Method 3: the LMF provides an allowed positioning error range, allowing the PRU/target UE to adjust the period T itself.

### Regarding the target UE side

At step 1, the target UE transmits a "UE-based NR CPP" positioning request information (i.e., the second message) to the LMF, where the positioning request message includes a type of differential correction value that it expects the LMF to provide.

At step 2, the target UE receives the first message notifying the first differential correction value from the LMF, and uses this first differential correction value to eliminate an initial phase offset RPD between different TRPs and an initial timing offset RTD between different TRPs included in the RSCPD measurement quantities. The target UE performs UE-based NR CPP positioning calculation based on the differential positioning measurement quantity RSCPD after offset elimination.

### Regarding the base station/TRP side

At step 1, the TRP receives a "first differential correction value request" message (i.e., the fourth message) from the LMF and calculates a second differential correction value. The request message includes information related to the reference TRP. The multiple TRPs may calculate the second differential correction value based on pre-stored known information, or may calculate the second differential correction value based on information obtained from measurements of PRSs transmitted between TRPs.

At step 2, the TRP reports the second differential correction value to the LMF in a direct reporting manner. The reporting manner for the second differential correction values includes: periodic reporting and/or reporting in a non-periodic manner. For periodic reporting, a reporting period for the second differential correction value needs to be defined and configured. For reporting in the non-periodic manner, a reporting threshold for the second differential correction value and/or measurement quality indicator can be defined and configured, that is, when the second differential correction value and/or measurement quality indicator exceeds a certain threshold, the TRP reports the second differential correction value; otherwise, the TRP does not report the second differential correction value.

At step 3, the TRP transmits downlink PRS signals to the PRU and the target UE.

### Embodiment 2

### Regarding the LMF side

At step 1, the LMF receives "UE-based NR CPP" positioning request information (i.e., the second message) transmitted by a target terminal (UE), where the positioning request message includes "NR CPP differential correction value" (i.e., a type of differential correction value) that the target UE expects the LMF to provide.

Here, "expect" can be understood as the type of differential correction value that the terminal needs or wants the first core network device to provide, or can also be referred to as the type of differential correction value that the terminal requests the first core network device to provide. For example, the types of differential correction values include but are not limited to at least one of HRTD, RPD, time variation rate of the HRTD or time variation rate of the RPD. For instance, if the terminal informs the first core network device via the second message that the type of differential correction value the terminal expects, needs, or requests the first core network device to provide is HRTD and time variation rate of the HRTD, then the first message transmitted from the first core network device to the terminal may carry a value of HRTD and a value of time variation rate of the HRTD. Of course, the embodiments of the present disclosure are not limited thereto.

At step 2, the LMF transmits an "NR CPP differential correction value" request message (i.e., the fourth message) to one or more TRPs, and/or transmits an "NR CPP differential correction value" request message (i.e., the sixth message) to one or more PRUs (or reference UEs), where the request message includes information related to a reference TRP. The request message may be transmitted before, after, or simultaneously with transmission of a downlink positioning assistance data message to the PRU.

At step 3, the LMF obtains a first differential correction value through the following second and third ways.

The first differential correction value includes at least one of the following:
an HRTD between a non-reference TRP and a reference TRP;
an RPD between the non-reference TRP and the reference TRP;
a time variation rate of the HRTD;
time variation rate of the RPD.

The second way is based on direct reporting from a PRU, that is, the LMF receives a second differential correction value reported by one PRU and determines it as the first differential correction value. Or, the LMF receives second differential correction values reported by multiple PRUs and further processes them to obtain the first differential correction value.

The third way is based on indirect reporting from a PRU; that is, the LMF receives RSTD and RSCPD measurement quantities and measurement quality indicators reported by one or more PRUs.

At step 4, the LMF notifies the target UE of the first differential correction value.

The first message by which the LMF notifies the target UE of the first differential correction value may be carried by UE-based positioning assistance data, or carried by a message which carries UE-based positioning assistance data, or carried by a positioning request message, or carried by a newly defined message, etc. For example, the first message may be broadcast, or unicast, or multicast, etc. The first message may be transmitted periodically or a non-periodic manner.

### Regarding the PRU side

At step 1, the PRU (or reference UE) receives a "first differential correction value request" message (i.e., the sixth message) from the LMF, where the request message includes information related to a reference TRP. The message may be transmitted before, after, or simultaneously with transmission of a downlink positioning assistance data message.

At step 2, multiple PRUs measure downlink PRS signals from different TRPs within the same time window notified by the LMF, obtain RSTD and RSCPD measurement quantities and measurement quality indicators, further calculate HRTD and RPD, and then obtain the time variation rates of HRTD and RPD via RTD and RPD at different moments.

In some embodiments, the PRU judges, via the measurement quality indicators, whether the quality of the current RSTD and RSCPD measurement quantities meets an accuracy requirement for the "NR CPP differential correction value".

If it meets the requirement, the PRU performs a difference operation between the RSTD and RSCPD measurement quantities and ideal RSTD and RSCPD values to obtain HRTD and RPD, and obtains time variation rates of HRTD and RPD via RTD and RPD at different moments. Then the step 3 is performed.

If it does not meet the requirement, the PRU discards the current RSTD and RSCPD measurement quantities.

At step 3, the PRU reports the second differential correction value to the LMF in a direct reporting manner or indirect reporting manner, or reports reference signal measurement quantities and measurement quality indicators for calculating the first differential correction value.

For the direct reporting manner, one or multiple PRUs report the second differential correction value to the LMF.

For the indirect reporting manner, one or multiple PRUs report the RSTD and RSCPD measurement quantities and measurement quality indicators to the LMF.

### Regarding the target UE side

At step 1, the target UE transmits "UE-based NR CPP" positioning request information (i.e., the second message) to the LMF, where the positioning request message includes a type of differential correction value that it expects the LMF to provide.

At step 2, the target UE receives the first message notifying the first differential correction value from the LMF, and uses this first differential correction value to eliminate an initial phase offset RPD between different TRPs and an initial timing offset RTD between different TRPs included in the RSCPD measurement quantities. The target UE performs UE-based NR CPP positioning calculation based on the differential positioning measurement quantity RSCPD after offset elimination.

### Regarding the base station/TRP side

The TRP transmits downlink PRS signals to the PRU and the target UE.

In the embodiments of the present disclosure, the LMF notifies the target UE of the first differential correction value by carrying it in the first message, for the target UE to use this first differential correction value to eliminate the initial RPD between different TRPs and the initial RTD between different TRPs, thereby achieving high-precision positioning result based on UE-based NR CPP positioning calculation, and then solving the problems of heavy load on the PRU and significant signaling overhead in conventional double difference schemes.

The above embodiments introduce the information processing method of the present disclosure. The following embodiment will further describe the corresponding terminal, core network device, transmission and reception point, and positioning reference unit in conjunction with the accompanying drawings.

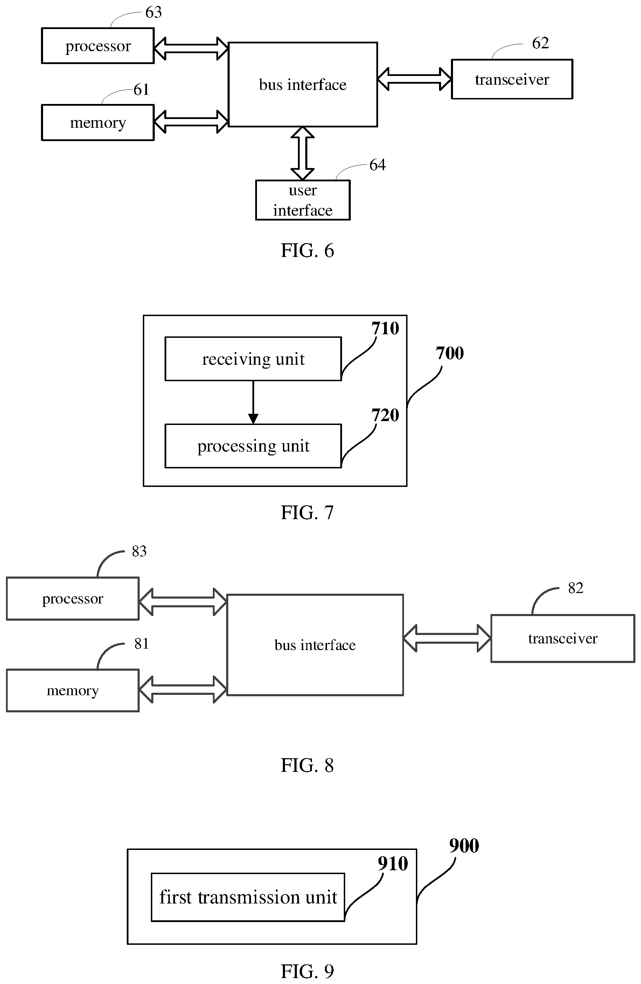

As shown in FIG. 6, one embodiment provides a terminal, including a memory 61, a transceiver 62, and a processor 63. The memory 61 is used to store a computer program. The transceiver 62 is used to transmit and receive data under the control of the processor 63; for example, the transceiver 62 is used to receive and send data under the control of the processor 63. The processor 63 is used to read the computer program in the memory 61 and perform the following operations:
receiving a first message transmitted by a first core network device; where the first message carries a first differential correction value.
performing positioning calculation according to the first differential correction value.

The first differential correction value includes at least one of the following:
a High-accuracy Relative Time Difference (HRTD) between a non-reference TRP and a reference TRP;
a Relative Phase Difference (RPD) between a non-reference TRP and a reference TRP;
time variation rate of the HRTD; or
time variation rate of the RPD.

In some embodiments, the first message further carries at least one of the following information:
TRP transmission Timing Error Group Identity (TEG ID);
a TRP transmission antenna identity;
an Antenna Reference Point Identity (ARP ID);
time information corresponding to the HRTD; or,
time information corresponding to the RPD.

In some embodiments, the granularity of the HRTD is smaller than *T_{c}*; where *T_{c}* = 1/(Δ*fₘₐₓ · N_{f}*), Δ*fₘₐₓ* is the maximum subcarrier spacing, and *N_{f}* is the number of Fast Fourier Transform (FFT) points.

In some embodiments, the processor 63 is used to read the computer program in the memory 61 and perform the following operation:
transmitting a second message to the first core network device; where the second message carries a type of differential correction value that the terminal expects to be provided by the first core network device.

In some embodiments, the first message further carries positioning assistance data;
or,
the first message carries positioning assistance data, and the positioning assistance data includes the first differential correction value;
   or,
the first message is used to request UE capability.

In some embodiments, the processor 63 is used to read the computer program in the memory 61 and perform the following operations:
eliminating, according to the first differential correction value, phase offset and/or timing offset in Reference Signal Carrier Phase Difference (RSCPD) measurement quantities, thereby obtaining a first RSCPD;
performing positioning calculation according to the first RSCPD.

In FIG. 6, the bus architecture may include any number of interconnected buses and bridges, specifically linking various circuits represented by the processor 63 and the memory 61. The bus architecture may also link various other circuits such as peripheral devices, voltage regulators, and power management circuits, which are well-known in the art and therefore will not be further described herein. The bus interface provides an interface. The transceiver 62 may include multiple elements, including a transmitter and a receiver, providing units for communicating with various other devices over transmission media, where these transmission media include wireless channels, wired channels, optical fibers, etc. For different user equipment, the user interface 64 may also be an interface capable of connecting external or internal devices, where the connected devices include but are not limited to a keypad, display, speaker, microphone, joystick, etc.

The processor 63 is responsible for managing the bus architecture and general processing, and the memory 61 may store data used by the processor 63 when performing operations.

In some embodiments, the processor 63 may be a Central Processing Unit (CPU), Application Specific Integrated Circuit (ASIC), Field-Programmable Gate Array (FPGA), or Complex Programmable Logic Device (CPLD). The processor may also adopt a multi-core architecture.

The processor executes the method provided by any embodiment of the present disclosure by calling computer programs stored in the memory according to obtained executable instructions. The processor and the memory may also be physically separated.

It is to be noted here that the terminal provided by the embodiments of the present disclosure can implement all method steps implemented in the information processing method embodiments on the terminal side and achieve the same technical effects. The parts and beneficial effects of this embodiment that are the same as the method embodiment will not be described in detail here.

As shown in FIG. 7, one embodiment of the present disclosure provides a terminal 700, including:
a receiving unit 710 used to receive a first message transmitted by a first core network device; where the first message carries a first differential correction value;
a processing unit 720 used to perform positioning calculation according to the first differential correction value.

The first differential correction value includes at least one of the following:
a High-accuracy Relative Time Difference (HRTD) between a non-reference TRP and a reference TRP;
a Relative Phase Difference (RPD) between a non-reference TRP and a reference TRP;
time variation rate of the HRTD; or
time variation rate of the RPD.

In some embodiments, the first message further carries at least one of the following information:
TRP transmission Timing Error Group Identity (TEG ID);
a TRP transmission antenna identity;
an Antenna Reference Point Identity (ARP ID);
time information corresponding to the HRTD; or,
time information corresponding to the RPD.

In some embodiments, the granularity of the HRTD is smaller than *T_{c}*; where *T_{c}* = 1/(Δ*fₘₐₓ · N_{f}*), Δ*fₘₐₓ* is the maximum subcarrier spacing, and *N_{f}* is the number of Fast Fourier Transform (FFT) points.

In some embodiments, the terminal 700 further includes:
a transmission unit used to transmit a second message to the first core network device; where the second message carries a type of differential correction value that the terminal expects to be provided by the first core network device.

In some embodiments, the first message further carries positioning assistance data;
or,
the first message carries positioning assistance data, and the positioning assistance data includes the first differential correction value;
   or,
the first message is used to request UE capability.

In some embodiments, the processing unit 720 is further used to:
eliminate, according to the first differential correction value, phase offset and/or timing offset in Reference Signal Carrier Phase Difference (RSCPD) measurement quantities, thereby obtaining a first RSCPD;
perform positioning calculation according to the first RSCPD.

It should be noted that the terminal provided by the embodiments of the present disclosure can implement all method steps implemented in the information processing method embodiments on the terminal side and achieve the same technical effects. Details and beneficial effects in this embodiment that are the same as those in the method embodiments are not specifically repeated here.

As shown in FIG. 8, one embodiment of the present disclosure provides a core network device, including a memory 81, a transceiver 82, and a processor 83. The memory 81 is used to store a computer program. The transceiver 82 is used to transmit and receive data under the control of the processor 83; for example, the transceiver 82 is used to receive and send data under the control of the processor 83. The processor 83 is used to read the computer program in the memory 81 and perform the following operations:
transmitting a first message to a terminal; where the first message carries a first differential correction value, and the first differential correction value includes at least one of the following:
a High-accuracy Relative Time Difference (HRTD) between a non-reference TRP and a reference TRP;
a Relative Phase Difference (RPD) between a non-reference TRP and a reference TRP;
time variation rate of the HRTD; or
time variation rate of the RPD.

In some embodiments, the first message further carries at least one of the following information:
TRP transmission Timing Error Group Identity (TRP Tx TEG ID);
a TRP transmission antenna identity;
an Antenna Reference Point Identity (ARP ID);
time information corresponding to the HRTD; or,
time information corresponding to the RPD.

In some embodiments, the granularity of the HRTD is smaller than *T_{c}*; where *T_{c}* = 1/(Δ*fₘₐₓ · N_{f}*), Δ*fₘₐₓ* is the maximum subcarrier spacing, and *N_{f}* is the number of Fast Fourier Transform (FFT) points.

In some embodiments, the processor 83 is used to read the computer program in the memory 81 and perform the following operation:
receiving a second message transmitted by the terminal; where the second message carries a type of differential correction value that the terminal expects to be provided by the first core network device.

In some embodiments, the processor 83 is used to read the computer program in the memory 81 and perform the following operation:
determining the first differential correction value.

In some embodiments, the processor 83 is used to read the computer program in the memory 81 and perform the following operations:
receiving a third message transmitted by one or more TRPs; where the third message carries a second differential correction value;
determining the first differential correction value according to the second differential correction value;
where the second differential correction value includes at least one of the following:
   a High-accuracy Relative Time Difference (HRTD) between a non-reference TRP and a reference TRP;
   a Relative Phase Difference (RPD) between a non-reference TRP and a reference TRP;
   time variation rate of the HRTD; or
   time variation rate of the RPD.

In some embodiments, the processor 83 is used to read the computer program in the memory 81 and perform the following operation:
transmitting a fourth message to the one or more TRPs; where the fourth message is used to request for obtaining the first differential correction value, and the fourth message carries information related to the reference TRP.

In some embodiments, the processor 83 is used to read the computer program in the memory 81 and perform the following operations:
receiving a fifth message transmitted by one or more PRUs; where the fifth message carries a second differential correction value;
determining the first differential correction value according to the second differential correction value;
where the second differential correction value includes at least one of the following:
   a High-accuracy Relative Time Difference (HRTD) between a non-reference TRP and a reference TRP;
   a Relative Phase Difference (RPD) between a non-reference TRP and a reference TRP;
   time variation rate of the HRTD; or
   time variation rate of the RPD.

In some embodiments, the processor 83 is used to read the computer program in the memory 81 and perform the following operations:
in case that the second differential correction value is transmitted by one TRP or one PRU, determining the second differential correction value as the first differential correction value;
   and/or,
in case that second differential correction values are transmitted by multiple TRPs or multiple PRUs, performing averaging or combining processing on the second differential correction values to obtain the first differential correction value.

In some embodiments, the processor 83 is used to read the computer program in the memory 81 and perform the following operations:
receiving a fifth message transmitted by one or more PRUs; where the fifth message carries reference signal measurement quantities and measurement quality indicators;
in case that the measurement quality indicators meet a differential correction accuracy requirement, determining the first differential correction value according to the reference signal measurement quantities.

In some embodiments, the reference signal measurement quantities include: RSTD measurement quantities, and/or, RSCPD measurement quantities;
and/or, the measurement quality indicators include: measurement quality indicators of RSTD, and/or, measurement quality indicators of RSCPD.

In some embodiments, the processor 83 is used to read the computer program in the memory 81 and perform the following operations:
processing the reference signal measurement quantities to obtain a second differential correction value;
in case that the reference signal measurement quantities are transmitted by one PRU, determining the second differential correction value as the first differential correction value; and/or, in case that the reference signal measurement quantities are transmitted by multiple PRUs, performing averaging or combining processing on the second differential correction values corresponding to the multiple PRUs to obtain the first differential correction value.

In some embodiments, the processor 83 is used to read the computer program in the memory 81 and perform at least one of the following operations:
performing a difference operation between an RSTD measurement quantity and an ideal RSTD value to obtain an HRTD;
performing a difference operation between an RSCPD measurement quantity and an ideal RSCPD value to obtain an RPD;
determining a time variation rate of HRTD according to HRTDs at different moments;
determining a time variation rate of RPD according to RPDs at different moments.

In some embodiments, the processor 83 is used to read the computer program in the memory 81 and perform the following operation:
transmitting a sixth message to the one or more PRUs; where the sixth message is used to request for obtaining the first differential correction value, and the sixth message carries information related to the reference TRP.

In some embodiments, the first message further carries positioning assistance data;
or,
the first message carries positioning assistance data, and the positioning assistance data includes the first differential correction value;
   or,
the first message is used to request UE capability.

In FIG. 8, a bus architecture may include any number of interconnected bus and bridge. Specifically, various circuits of one or more processors, which are represented by the processor 83, and one or more memories, which are represented by the memory 81 are linked together. The bus architecture may link various other circuits, such as a peripheral device, voltage regulator and a power management circuit together. These features are well known in this field; therefore, this disclosure does not make further description on these features. The bus interface provides an interface. The transceiver 82 may be multiple elements, including a transmitter and a receiver and provide units, which communicate with other devices on the transmission medium. The transmission medium includes radio channels, wired channels, optical cables, etc. The processor 83 is responsible for managing the bus architecture and the normal processing. The memory 81 may be used to store data used by the processor 83 for performing operations.

The processor 83 may be a central processing unit (CPU), an application specific integrated circuit (ASIC), a field-programmable gate array (FPGA) or a complex programmable logic device (CPLD). The processor may also adopt multi-core architecture.

It is to be noted that the above core network device provided in this embodiment of the present disclosure can implement all the method steps of the above information processing method embodiment applied to the first core network device, and can achieve the same technical effect. The parts and beneficial effects of this embodiment that are the same as the method embodiment will not be described in detail here.

As shown in FIG. 9, one embodiment of the present disclosure provides a core network device 900, including:
a first transmission unit 910 used to transmit a first message to a terminal; where the first message carries a first differential correction value, and the first differential correction value includes at least one of the following:
a High-accuracy Relative Time Difference (HRTD) between a non-reference TRP and a reference TRP;
a Relative Phase Difference (RPD) between a non-reference TRP and a reference TRP;
time variation rate of the HRTD; or
time variation rate of the RPD.

In some embodiments, the first message further carries at least one of the following information:
TRP transmission Timing Error Group Identity (TRP Tx TEG ID);
a TRP transmission antenna identity;
an Antenna Reference Point Identity (ARP ID);
time information corresponding to the HRTD; or,
time information corresponding to the RPD.

In some embodiments, the granularity of the HRTD is smaller than *T_{c}*; where *T_{c}* = 1/(Δ*fₘₐₓ · N_{f}*), Δ*fₘₐₓ* is the maximum subcarrier spacing, and *N_{f}* is the number of Fast Fourier Transform (FFT) points.

In some embodiments, the core network device 900 further includes:
a first receiving unit used to receive a second message transmitted by the terminal; where the second message carries a type of differential correction value that the terminal expects to be provided by the first core network device.

In some embodiments, the core network device 900 further includes:
a determining unit used to determine the first differential correction value.

In some embodiments, the determining unit is further used to:
receive a third message transmitted by one or more TRPs; where the third message carries a second differential correction value;
determine the first differential correction value according to the second differential correction value;
where the second differential correction value includes at least one of the following:
   a High-accuracy Relative Time Difference (HRTD) between a non-reference TRP and a reference TRP;
   a Relative Phase Difference (RPD) between a non-reference TRP and a reference TRP;
   time variation rate of the HRTD; or
   time variation rate of the RPD.

In some embodiments, the core network device 900 further includes:
a second transmission unit used to transmit a fourth message to the one or more TRPs; where the fourth message is used to request for obtaining the first differential correction value, and the fourth message carries information related to the reference TRP.

In some embodiments, the determining unit is further used to:
receive a fifth message transmitted by one or more PRUs; where the fifth message carries a second differential correction value;
determining the first differential correction value according to the second differential correction value;
where the second differential correction value includes at least one of the following:
   a High-accuracy Relative Time Difference (HRTD) between a non-reference TRP and a reference TRP;
   a Relative Phase Difference (RPD) between a non-reference TRP and a reference TRP;
   time variation rate of the HRTD; or
   time variation rate of the RPD.

In some embodiments, the determining unit is further used to:
in case that the second differential correction value is transmitted by one TRP or one PRU, determine the second differential correction value as the first differential correction value;
   and/or,
in case that second differential correction values are transmitted by multiple TRPs or multiple PRUs, perform averaging or combining processing on the second differential correction values to obtain the first differential correction value.

In some embodiments, the determining unit is further used to:
receive a fifth message transmitted by one or more PRUs; where the fifth message carries reference signal measurement quantities and measurement quality indicators;
in case that the measurement quality indicators meet a differential correction accuracy requirement, determine the first differential correction value according to the reference signal measurement quantities.

In some embodiments, the reference signal measurement quantities include: RSTD measurement quantities, and/or, RSCPD measurement quantities;
and/or, the measurement quality indicators include: measurement quality indicators of RSTD, and/or, measurement quality indicators of RSCPD.

In some embodiments, the determining unit is further used to:
process the reference signal measurement quantities to obtain a second differential correction value;
in case that the reference signal measurement quantities are transmitted by one PRU, determine the second differential correction value as the first differential correction value; and/or, in case that the reference signal measurement quantities are transmitted by multiple PRUs, perform averaging or combining processing on the second differential correction values corresponding to the multiple PRUs to obtain the first differential correction value.

In some embodiments, the determining unit is further used to:
perform a difference operation between an RSTD measurement quantity and an ideal RSTD value to obtain an HRTD;
perform a difference operation between an RSCPD measurement quantity and an ideal RSCPD value to obtain an RPD;
determine a time variation rate of HRTD according to HRTDs at different moments;
determine a time variation rate of RPD according to RPDs at different moments.

In some embodiments, the core network device 900 further includes:
a third transmission unit used to transmitt a sixth message to the one or more PRUs; where the sixth message is used to request for obtaining the first differential correction value, and the sixth message carries information related to the reference TRP.

In some embodiments, the first message further carries positioning assistance data;
or,
the first message carries positioning assistance data, and the positioning assistance data includes the first differential correction value;
   or,
the first message is used to request UE capability.

It should be noted that the core network device provided by the embodiments of the present disclosure can implement all method steps implemented in the information processing method embodiments on the first core network device side and achieve the same technical effects. Details and beneficial effects in this embodiment that are the same as those in the method embodiments are not specifically repeated here.

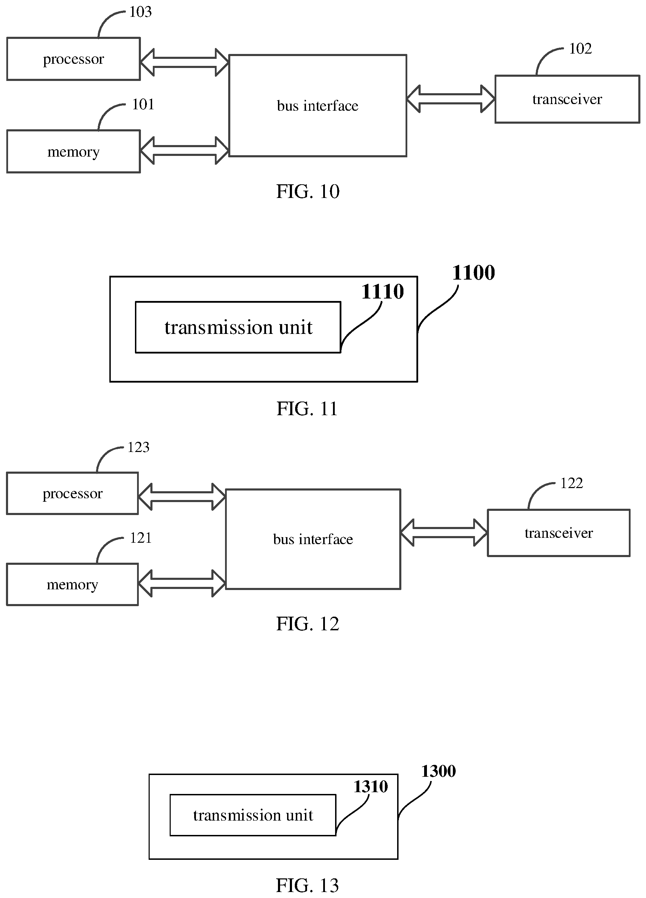

As shown in FIG. 10, one embodiment of the present disclosure provides a transmission and reception point, including a memory 101, a transceiver 102, and a processor 103. The memory 101 is used to store a computer program. The transceiver 102 is used to transmit and receive data under the control of the processor 103; for example, the transceiver 102 is used to receive and send data under the control of the processor 103. The processor 103 is used to read the computer program in the memory 101 and perform the following operation:
transmitting a third message to a first core network device; where the third message carries a second differential correction value.

The second differential correction value includes at least one of the following:
a High-accuracy Relative Time Difference (HRTD) between a non-reference TRP and a reference TRP;
a Relative Phase Difference (RPD) between a non-reference TRP and a reference TRP;
time variation rate of the HRTD; or
time variation rate of the RPD.

In some embodiments, the granularity of the HRTD is smaller than *T_{c}*; where *T_{c}* = 1/(Δ*fₘₐₓ · N_{f}*), Δ*fₘₐₓ* is the maximum subcarrier spacing, and *N_{f}* is the number of Fast Fourier Transform (FFT) points.

In some embodiments, the processor 103 is used to read the computer program in the memory 101 and perform the following operation:
receiving a fourth message transmitted by the first core network device; where the fourth message is used to request for obtaining the first differential correction value, and the fourth message carries information related to the reference TRP.

In some embodiments, the processor 103 is used to read the computer program in the memory 101 and perform the following operations:
transmitting the third message to the first core network device in a periodic manner;
   or,
in case that a first condition is satisfied, transmitting the third message to the first core network device;
where the first condition includes at least one of the following:
   the HRTD is greater than a first threshold;
   the RPD is greater than a second threshold;
   a measurement quality indication of an RSTD is greater than a third threshold;
   a measurement quality indication of an RSCPD is greater than a fourth threshold.

In FIG. 10, a bus architecture may include any number of interconnected bus and bridge. Specifically, various circuits of one or more processors, which are represented by the processor 103, and one or more memories, which are represented by the memory 101 are linked together. The bus architecture may link various other circuits, such as a peripheral device, voltage regulator and a power management circuit together. These features are well known in this field; therefore, this disclosure does not make further description on these features. The bus interface provides an interface. The transceiver 102 may be multiple elements, including a transmitter and a receiver and provide units, which communicate with other devices on the transmission medium. The transmission medium includes radio channels, wired channels, optical cables, etc. The processor 103 is responsible for managing the bus architecture and the normal processing. The memory 101 may be used to store data used by the processor 103 for performing operations.

In some embodiments, the processor 103 may be a central processing unit (CPU), an application specific integrated circuit (ASIC), a field-programmable gate array (FPGA) or a complex programmable logic device (CPLD). The processor may also adopt multi-core architecture.

The processor executes the method provided by any embodiment of the present disclosure by calling computer programs stored in the memory according to obtained executable instructions. The processor and the memory may also be physically separated.

It should be noted that the transmission and reception point provided by the embodiments of the present disclosure can implement all method steps implemented in the information processing method embodiments on the transmission and reception point side and achieve the same technical effects. The parts and beneficial effects of this embodiment that are the same as the method embodiment will not be described in detail here.

As shown in FIG. 11, one embodiment of the present disclosure provides a transmission and reception point 1100, including:
a transmission unit 1110 used to transmit a third message to a first core network device; where the third message carries a second differential correction value.

The second differential correction value includes at least one of the following:
a High-accuracy Relative Time Difference (HRTD) between a non-reference TRP and a reference TRP;
a Relative Phase Difference (RPD) between a non-reference TRP and a reference TRP;
time variation rate of the HRTD; or
time variation rate of the RPD.

In some embodiments, the granularity of the HRTD is smaller than *T_{c}*; where *T_{c}* = 1/(Δ*fₘₐₓ · N_{f}*), Δ*fₘₐₓ* is the maximum subcarrier spacing, and *N_{f}* is the number of Fast Fourier Transform (FFT) points.

In some embodiments, the transmission unit 1110 further includes:
a receiving unit used to receive a fourth message transmitted by the first core network device; where the fourth message is used to request for obtaining the first differential correction value, and the fourth message carries information related to the reference TRP.

In some embodiments, the transmission unit 1110 is further used to:
transmit the third message to the first core network device in a periodic manner;
   or,
in case that a first condition is satisfied, transmit the third message to the first core network device;
where the first condition includes at least one of the following:
   the HRTD is greater than a first threshold;
   the RPD is greater than a second threshold;
   a measurement quality indication of an RSTD is greater than a third threshold;
   a measurement quality indication of an RSCPD is greater than a fourth threshold.

It should be noted that the transmission and reception point provided by the embodiments of the present disclosure can implement all method steps implemented in the information processing method embodiments on the transmission and reception point side and achieve the same technical effects. The parts and beneficial effects of this embodiment that are the same as the method embodiment will not be described in detail here.

As shown in FIG. 12, one embodiment of the present disclosure provides a positioning reference unit, including a memory 121, a transceiver 122, and a processor 123. The memory 121 is used to store a computer program. The transceiver 122 is used to transmit and receive data under the control of the processor 123; for example, the transceiver 122 is used to receive and send data under the control of the processor 123. The processor 123 is used to read the computer program in the memory 121 and perform the following operation:
transmitting a fifth message to a first core network device; where the fifth message carries a second differential correction value, or the fifth message carries reference signal measurement quantities and measurement quality indicators;
where the second differential correction value includes at least one of the following:
   a High-precision Relative Time Difference (HRTD) between a non-reference TRP and a reference TRP;
   a Relative Phase Difference (RPD) between a non-reference TRP and a reference TRP;
   a time variation rate of the HRTD;
   time variation rate of the RPD.

In some embodiments, the reference signal measurement quantities include: RSTD measurement quantities, and/or, RSCPD measurement quantities;
and/or,
the measurement quality indicators include: measurement quality indicators of RSTD, and/or, measurement quality indicators of RSCPD.

In some embodiments, the granularity of the HRTD is smaller than *T_{c}*; where *T_{c} =* 1/(Δ*fₘₐₓ · N_{f}*), Δ*fₘₐₓ* is the maximum subcarrier spacing, and *N_{f}* is the number of Fast Fourier Transform (FFT) points.

In some embodiments, the processor 123 is used to read the computer program in the memory 121 and perform the following operation:
receiving a sixth message transmitted by the first core network device; where the sixth message is used to request for obtaining the first differential correction value, and the sixth message carries information related to the reference TRP.

In some embodiments, the processor 123 is used to read the computer program in the memory 121 and perform the following operation:
measuring a positioning reference signal (PRS) transmitted by a TRP to obtain the reference signal measurement quantities and measurement quality indicators;
transmitting the fifth message to the first core network device; where the fifth message carries the reference signal measurement quantities and measurement quality indicators.

In some embodiments, the processor 123 is used to read the computer program in the memory 121 and perform the following operation:
measuring a positioning reference signal (PRS) transmitted by a TRP to obtain the reference signal measurement quantities and measurement quality indicators;
in case that the measurement quality indicators meet differential correction accuracy requirement, processing the reference signal measurement quantities to obtain the second differential correction value;
transmitting the fifth message to the first core network device; where the fifth message carries the second differential correction value.

In some embodiments, the processor 123 is used to read the computer program in the memory 121 and perform least one of the following operation:
performing a difference operation between an RSTD measurement quantity and an ideal RSTD value to obtain an HRTD;
performing a difference operation between an RSCPD measurement quantity and an ideal RSCPD value to obtain an RPD;
determining a time variation rate of HRTD according to HRTDs at different moments;
determining a time variation rate of RPD according to RPDs at different moments.

In FIG. 12, a bus architecture may include any number of interconnected bus and bridge. Specifically, various circuits of one or more processors, which are represented by the processor 123, and one or more memories, which are represented by the memory 121 are linked together. The bus architecture may link various other circuits, such as a peripheral device, voltage regulator and a power management circuit together. These features are well known in this field; therefore, this disclosure does not make further description on these features. The bus interface provides an interface. The transceiver 122 may be multiple elements, including a transmitter and a receiver and provide units, which communicate with other devices on the transmission medium. The transmission medium includes radio channels, wired channels, optical cables, etc.

The processor 123 is responsible for managing the bus architecture and the normal processing. The memory 121 may be used to store data used by the processor 123 for performing operations.

In some embodiments, the processor 123 may be a central processing unit (CPU), an application specific integrated circuit (ASIC), a field-programmable gate array (FPGA) or a complex programmable logic device (CPLD). The processor may also adopt multi-core architecture.

The processor executes the method provided by any embodiment of the present disclosure by calling computer programs stored in the memory according to obtained executable instructions. The processor and the memory may also be physically separated.

It should be noted that the positioning reference unit provided by the embodiments of the present disclosure can implement all method steps implemented in the information processing method embodiments on the positioning reference unit side and achieve the same technical effects. The parts and beneficial effects of this embodiment that are the same as the method embodiment will not be described in detail here.

As shown in FIG. 13, one embodiment of the present disclosure provides a positioning reference unit 1300, including:
a transmission unit 1310 used to transmit a fifth message to a first core network device; where the fifth message carries a second differential correction value, or the fifth message carries reference signal measurement quantities and measurement quality indicators;
where the second differential correction value includes at least one of the following:
   a High-precision Relative Time Difference (HRTD) between a non-reference TRP and a reference TRP;
   a Relative Phase Difference (RPD) between a non-reference TRP and a reference TRP;
   a time variation rate of the HRTD;
   time variation rate of the RPD.

In some embodiments, the reference signal measurement quantities include: RSTD measurement quantities, and/or, RSCPD measurement quantities;
and/or,
the measurement quality indicators include: measurement quality indicators of RSTD, and/or, measurement quality indicators of RSCPD.

In some embodiments, the granularity of the HRTD is smaller than *T_{c}*; where *T_{c} =* 1/(Δ*fₘₐₓ · N_{f}*), Δ*fₘₐₓ* is the maximum subcarrier spacing, and *N_{f}* is the number of Fast Fourier Transform (FFT) points.

In some embodiments, the positioning reference unit 1300 further includes:
a receiving unit used to receive a sixth message transmitted by the first core network device; where the sixth message is used to request for obtaining the first differential correction value, and the sixth message carries information related to the reference TRP.

In some embodiments, the transmission unit 1310 is further used to:
measure a positioning reference signal (PRS) transmitted by a TRP to obtain the reference signal measurement quantities and measurement quality indicators;
transmit the fifth message to the first core network device; where the fifth message carries the reference signal measurement quantities and measurement quality indicators.

In some embodiments, the transmission unit 1310 is further used to:
measure a positioning reference signal (PRS) transmitted by a TRP to obtain the reference signal measurement quantities and measurement quality indicators;
in case that the measurement quality indicators meet differential correction accuracy requirement, process the reference signal measurement quantities to obtain the second differential correction value;
transmit the fifth message to the first core network device; where the fifth message carries the second differential correction value.

In some embodiments, the transmission unit 1310 is further used to perform least one of the following:
performing a difference operation between an RSTD measurement quantity and an ideal RSTD value to obtain an HRTD;
performing a difference operation between an RSCPD measurement quantity and an ideal RSCPD value to obtain an RPD;
determining a time variation rate of HRTD according to HRTDs at different moments;
determining a time variation rate of RPD according to RPDs at different moments.

It should be noted that the positioning reference unit provided by the embodiments of the present disclosure can implement all method steps implemented in the information processing method embodiments on the positioning reference unit side and achieve the same technical effects. Details and beneficial effects in this embodiment that are the same as those in the method embodiments are not specifically repeated here.

It should be noted that the division of units in the embodiments of the present disclosure is schematic and is only a logical function division. In actual implementation, there may be other division methods. In addition, the functional units in various embodiments of the present disclosure may be integrated into one processing unit, or each unit may exist physically alone, or two or more units may be integrated into one unit. The above integrated units may be implemented in the form of hardware or software functional units.

If the integrated unit is implemented in the form of a software functional unit and sold or used as an independent product, it may be stored in a processor-readable storage medium. Based on this understanding, the technical solution of the present disclosure essentially or the part contributing to the prior art or all or part of the technical solution may be embodied in the form of a software product. The computer software product is stored in a storage medium and includes several instructions to enable a computer device (which may be a personal computer, server, or network device, etc.) or processor to perform all or part of the steps of the methods described in various embodiments of the present disclosure. The aforementioned storage medium includes: U disk, mobile hard disk, read-only memory (ROM), random access memory (RAM), magnetic disk, or optical disk, and other media that can store program code.

One embodiment of the present disclosure further provides a processor-readable storage medium, where the processor-readable storage medium stores a computer program, and the computer program is configured to cause a processor to perform the information processing method as described above and achieve the same technical effects. The parts and beneficial effects of this embodiment that are the same as the method embodiment will not be described in detail here.

The processor-readable storage medium may be any available medium or data storage device that the processor can access, including but not limited to magnetic memory (e.g., floppy disk, hard disk, magnetic tape, magneto-optical disk (MO), etc.), optical memory (e.g., compact disk (CD), digital versatile disc (DVD), Blu-ray disc (BD), high-definition versatile disc (HVD), etc.), and semiconductor memory (e.g., read-only memory (ROM), erasable programmable read-only memory (EPROM), electrically erasable programmable read-only memory (EEPROM), non-volatile memory (NAND FLASH), solid-state drive (SSD), etc.).

Those skilled in the art should understand that the embodiments of the present disclosure may be provided as methods, systems, or computer program products. Therefore, the present disclosure may adopt the form of a complete hardware embodiment, a complete software embodiment, or an embodiment combining software and hardware aspects. Moreover, the present disclosure may adopt the form of a computer program product implemented on one or more computer-usable storage media (including but not limited to disk storage and optical storage, etc.) containing computer-usable program code.

The present disclosure has been described with reference to the flow charts and/or block diagrams of the method, device (system) and computer program product according to the embodiments of the present disclosure. It should be understood that computer program instructions may be used to implement each of the work flows and/or blocks in the flow charts and/or the block diagrams, and the combination of the work flows and/or blocks in the flow charts and/or the block diagrams. These computer program instructions may be provided to a processor of a common computer, a dedicate computer, an embedded processor or any other programmable data processing devices to create a machine, so that instructions executable by the processor of the computer or the other programmable data processing devices may create a device to achieve the functions assigned in one or more work flows in the flow chart and/or one or more blocks in the block diagram.

These processor-executable instructions may also be stored in a computer readable storage that may guide the computer or the other programmable data process devices to function in a certain way, so that the instructions stored in the computer readable storage may create a product including an instruction unit which achieves the functions assigned in one or more flows in the flow chart and/or one or more blocks in the block diagram.

These processor-executable instructions may also be loaded in the computer or the other programmable data process devices, so that a series of operation steps are executed on the computer or the other programmable devices to create processes achieved by the computer. Therefore, the instructions executed in the computer or the other programmable devices provide the steps for achieving the function assigned in one or more flows in the flow chart and/or one or more blocks in the block diagram.

In addition, it is to be noted that in the device and method of the present disclosure, it is apparent that various components or steps may be decomposed and/or recombined. Such decomposition and/or recombination is regarded as equivalent solutions of the present disclosure. Further, the steps for executing the aforementioned series of processes may naturally be performed in the order described chronologically, but need not necessarily be performed in chronological order. Certain steps may be executed in parallel or independently of one another. Those of ordinary skill in the art will appreciate that all or any of the steps or components of the methods and device of the present disclosure may be implemented in any computing device (including processors, storage media, etc.) or network of computing devices, in the form of hardware, firmware, software, or a combination thereof. This can be achieved by those of ordinary skill in the art by applying their basic programming skills after reading the description of the present disclosure.

It is to be noted and understood that the division of the above modules is only a division of logical functions, which may be fully or partially integrated into a physical entity or physically separated in actual implementations. These modules may all be implemented in the form of software called by processing elements; or may all be implemented in the form of hardware; or, some modules may be implemented in the form of software called by processing elements, and some modules may be implemented in the form of hardware. For example, a determining module may be a separate processing element, or may be integrated into a certain chip of the above device, or, may be stored in the memory of the above device in the form of program code, and a certain processing element of the above device may call and execute the functions of the determination module. Other modules have similar implementations. In addition, all or part of these modules may be integrated together, and may be implemented independently. The processing element mentioned herein may be an integrated circuit with signal processing capability. In the implementation process, the various steps of the above method or the above various modules may be implemented by an integrated logic circuit in hardware form in elements of a processor or implemented by instructions in the form of software.

For example, the various modules, units, subunits or submodules may be one or more integrated circuits used to implement the above methods, such as one or more application specific integrated circuits (ASIC), or one or more microprocessors (Digital Signal Processor, DSP), or one or more field programmable gate arrays (FPGA), etc. As another example, when a module described above is implemented in the form of scheduling program codes by a processing element, the processing element may be a general purpose processor, such as a central processing unit (CPU) or other processors that may call program codes. As another example, these modules may be integrated together and implemented as a system-on-a-chip (SOC).

Terms such as "first" and "second" in the specification and the claims of the present application are used to distinguish similar objects and are not necessarily used to describe a specific order or sequence. It is to be understood that the terms used in this way may be interchanged under appropriate circumstances, so that the embodiments of the present application described herein may be implemented in a sequence other than those illustrated or described herein. In addition, terms such as "including" and "having" and any variations thereof are intended to cover non-exclusive inclusion. For example, a process, method, system, product or device including a series of steps or units is not limited to the steps or units that are clearly listed and may include other steps or units that are not clearly listed or are inherent to the process, method, product, or device. Moreover, the term "and/or" used in the specification and the claims indicates involving at least one of connected objects, for example, A and/or B and/or C means 7 situations, including: A alone, B alone, C alone, both A and B, both B and C, both A and C, and all of A, B and C. Similarly, the use of "at least one of A or B" in this specification and claims should be understood as "A alone, B alone, or both A and B".

Obviously, those skilled in the art can make various changes and modifications to the present application without departing from the spirit and scope of the present application. Thus, if these modifications and variations of the present application fall within the scope of the claims of the present application and equivalent technologies thereof, the present application also intends to include these modifications and variations.

## Claims

1. An information processing method, comprising:
receiving, by a user equipment (UE), a first message transmitted by a first core network device; wherein the first message carries a first differential correction value;
performing, by the UE, positioning calculation according to the first differential correction value;
wherein the first differential correction value comprises at least one of the following:
a high-accuracy relative time difference (HRTD) between a non-reference transmission and reception point (TRP) and a reference TRP;
a relative phase difference (RPD) between a non-reference TRP and a reference TRP;
time variation rate of the HRTD; or
time variation rate of the RPD.

2. The method according to claim 1, wherein the first message further carries at least one of the following information:
TRP transmission timing error group identity (TEG ID);
TRP transmission antenna identity;
antenna reference point identity (ARP ID);
time information corresponding to the HRTD; or,
time information corresponding to the RPD.

3. The method according to claim 1, wherein the granularity of the HRTD is smaller than *T_{c}*; wherein *T_{c}* = 1/(Δ*fₘₐₓ* · *N_{f}*), Δ*fₘₐₓ* is the maximum subcarrier spacing, and *N_{f}* is the number of fast fourier transform (FFT) points.

4. The method according to claim 1, wherein before receiving, by a UE, a first message transmitted by a first core network device, the method further comprises:
transmitting, by the UE, a second message to the first core network device; wherein the second message carries a type of differential correction value that the UE expects to be provided by the first core network device.

5. The method according to claim 1, wherein the first message further carries positioning assistance data;
or,
the first message carries positioning assistance data, and the positioning assistance data comprises the first differential correction value;
or,
the first message is used to request UE capability.

6. The method according to claim 1, wherein the performing, by the UE, positioning calculation according to the first differential correction value, comprises:
eliminating, by the UE, according to the first differential correction value, phase offset and/or timing offset in reference signal carrier phase difference (RSCPD) measurement quantities, thereby obtaining a first RSCPD;
performing positioning calculation according to the first RSCPD.

7. An information processing method, comprising:
transmitting, by a first core network device, a first message to a user equipment (UE); wherein the first message carries a first differential correction value, and the first differential correction value comprises at least one of the following:
a high-accuracy relative time difference (HRTD) between a non-reference transmission and reception point (TRP) and a reference TRP;
a relative phase difference (RPD) between a non-reference TRP and a reference TRP;
time variation rate of the HRTD; or
time variation rate of the RPD.

8. The method according to claim 7, wherein the first message further carries at least one of the following information:
TRP transmission timing error group identity (TEG ID);
TRP transmission antenna identity;
antenna reference point identity (ARP ID);
time information corresponding to the HRTD; or,
time information corresponding to the RPD.

9. The method according to claim 7, wherein the granularity of the HRTD is smaller than *T_{c}*; wherein *T_{c}* = 1/(Δ*fₘₐₓ* · *N_{f}*), Δ*fₘₐₓ* is the maximum subcarrier spacing, and *N_{f}* is the number of fast fourier transform (FFT) points.

10. The method according to claim 7, wherein before transmitting, by a first core network device, a first message to a user equipment (UE), the method further comprises:
receiving, by the first core network device, a second message transmitted by the UE; wherein the second message carries a type of differential correction value that the UE expects to be provided by the first core network device.

11. The method according to any one of claims 7 to 10, wherein before transmitting, by a first core network device, a first message to a user equipment (UE), the method further comprises:
determining, by the first core network device, the first differential correction value.

12. The method according to claim 11, wherein the determining, by the first core network device, the first differential correction value, comprises:
receiving, by the first core network device, a third message transmitted by one or more transmission and reception points (TRPs); wherein the third message carries a second differential correction value;
determining, by the first core network device, the first differential correction value according to the second differential correction value;
wherein the second differential correction value comprises at least one of the following:
a high-accuracy relative time difference (HRTD) between a non-reference transmission and reception point (TRP) and a reference TRP;
a relative phase difference (RPD) between a non-reference TRP and a reference TRP;
time variation rate of the HRTD; or
time variation rate of the RPD.

13. The method according to claim 12, wherein before receiving, by the first core network device, a third message transmitted by one or more TRPs, the method further comprises:
transmitting, by the first core network device, a fourth message to the one or more TRPs; wherein the fourth message is used to request for obtaining the first differential correction value, and the fourth message carries information related to the reference TRP.

14. The method according to claim 11, wherein the determining, by the first core network device, the first differential correction value, comprises:
receiving, by the first core network device, a fifth message transmitted by one or more positioning reference unit (PRUs); wherein the fifth message carries a second differential correction value;
determining, by the first core network device, the first differential correction value according to the second differential correction value;
wherein the second differential correction value comprises at least one of the following:
a high-accuracy relative time difference (HRTD) between a non-reference transmission and reception point (TRP) and a reference TRP;
a relative phase difference (RPD) between a non-reference TRP and a reference TRP;
time variation rate of the HRTD; or
time variation rate of the RPD.

15. The method according to claim 12 or 14, wherein the determining, by the first core network device, the first differential correction value according to the second differential correction value, comprises:
in case that the second differential correction value is transmitted by one TRP or one PRU, determining the second differential correction value as the first differential correction value;
and/or,
in case that second differential correction values are transmitted by multiple TRPs or multiple PRUs, performing averaging or combining processing on the second differential correction values to obtain the first differential correction value.

16. The method according to claim 11, wherein the determining, by the first core network device, the first differential correction value, comprises:
receiving, by the first core network device, a fifth message transmitted by one or more positioning reference unit (PRUs); wherein the fifth message carries reference signal measurement quantities and measurement quality indicators;
in case that the measurement quality indicators meet a differential correction accuracy requirement, determining, by the first core network device, the first differential correction value according to the reference signal measurement quantities.

17. The method according to claim 16, wherein the reference signal measurement quantities comprise: RSTD measurement quantities, and/or, RSCPD measurement quantities;
and/or,
the measurement quality indicators comprise: measurement quality indicators of RSTD, and/or, measurement quality indicators of RSCPD.

18. The method according to claim 16 or 17, wherein the determining, by the first core network device, the first differential correction value according to the reference signal measurement quantities, comprises:
processing, by the first core network device, the reference signal measurement quantities to obtain a second differential correction value;
in case that the reference signal measurement quantities are transmitted by one positioning reference unit (PRU), determining, by the first core network device, the second differential correction value as the first differential correction value; and/or, in case that the reference signal measurement quantities are transmitted by multiple PRUs, performing, by the first core network device, averaging or combining processing on the second differential correction values corresponding to the multiple PRUs to obtain the first differential correction value.

19. The method according to claim 18, wherein the processing, by the first core network device, the reference signal measurement quantities to obtain a second differential correction value, comprises:
performing, by the first core network device, a difference operation between an RSTD measurement quantity and an ideal RSTD value to obtain an HRTD;
performing, by the first core network device, a difference operation between an RSCPD measurement quantity and an ideal RSCPD value to obtain an RPD;
determining, by the first core network device, a time variation rate of HRTD according to HRTDs at different moments;
determining, by the first core network device, a time variation rate of RPD according to RPDs at different moments.

20. The method according to claim 14 or 16, wherein the receiving, by the first core network device, a fifth message transmitted by one or more PRUs, comprises:
transmitting, by the first core network device, a sixth message to the one or more PRUs; wherein the sixth message is used to request for obtaining the first differential correction value, and the sixth message carries information related to the reference TRP.

21. The method according to claim 7, wherein the first message further carries positioning assistance data;
or,
the first message carries positioning assistance data, and the positioning assistance data comprises the first differential correction value;
or,
the first message is used to request UE capability.

22. An information processing method, comprising:
transmitting, by a transmission and reception point (TRP), a third message to a first core network device; wherein the third message carries a second differential correction value, and the second differential correction value comprises at least one of the following:
a high-accuracy relative time difference (HRTD) between a non-reference transmission and reception point (TRP) and a reference TRP;
a relative phase difference (RPD) between a non-reference TRP and a reference TRP;
time variation rate of the HRTD; or
time variation rate of the RPD.

23. The method according to claim 22, wherein the granularity of the HRTD is smaller than *T_{c}*; wherein *T_{c} =* 1/(Δ*fₘₐₓ · N_{f}*), Δ*fₘₐₓ* is the maximum subcarrier spacing, and *N_{f}* is the number of fast fourier transform (FFT) points.

24. The method according to claim 22, wherein before transmitting, by a transmission and reception point (TRP), a third message to a first core network device, the method further comprises:
receiving, by the TRP, a fourth message transmitted by the first core network device; wherein the fourth message is used to request for obtaining a first differential correction value, and the fourth message carries information related to the reference TRP.

25. The method according to claim 22, wherein the transmitting, by a transmission and reception point (TRP), a third message to a first core network device, comprises:
transmitting, by the TRP, the third message to the first core network device in a periodic manner;
or,
in case that a first condition is satisfied, transmitting, by the TRP, the third message to the first core network device;
wherein the first condition comprises at least one of the following:
the HRTD is greater than a first threshold;
the RPD is greater than a second threshold;
a measurement quality indication of an RSTD is greater than a third threshold; or
a measurement quality indication of an RSCPD is greater than a fourth threshold.

26. An information processing method, comprising:
transmitting, by a positioning reference unit (PRU), a fifth message to a first core network device; wherein the fifth message carries a second differential correction value, or the fifth message carries reference signal measurement quantities and measurement quality indicators;
wherein the second differential correction value comprises at least one of the following:
a high-accuracy relative time difference (HRTD) between a non-reference transmission and reception point (TRP) and a reference TRP;
a relative phase difference (RPD) between a non-reference TRP and a reference TRP;
a time variation rate of the HRTD; or
time variation rate of the RPD.

27. The method according to claim 26, wherein the reference signal measurement quantities comprise: RSTD measurement quantities, and/or, RSCPD measurement quantities;
and/or,
the measurement quality indicators comprise: measurement quality indicators of RSTD, and/or, measurement quality indicators of RSCPD.

28. The method according to claim 26, wherein the granularity of the HRTD is smaller than *T_{c}*; where *T_{c}* = 1/(Δ*fₘₐₓ* · *N_{f}*), Δ*fₘₐₓ* is the maximum subcarrier spacing, and *N_{f}* is the number of fast fourier transform (FFT) points.

29. The method according to claim 26, wherein before transmitting, by a positioning reference unit (PRU), a fifth message to a first core network device, the method further comprises:
receiving, by the PRU, a sixth message transmitted by the first core network device; wherein the sixth message is used to request for obtaining the first differential correction value, and the sixth message carries information related to the reference TRP.

30. The method according to claim 26 or 27, wherein the transmitting, by a positioning reference unit (PRU), a fifth message to a first core network device, comprises:
measuring, by the PRU, a positioning reference signal (PRS) transmitted by a TRP to obtain the reference signal measurement quantities and measurement quality indicators;
transmitting, by the PRU, the fifth message to the first core network device; wherein the fifth message carries the reference signal measurement quantities and measurement quality indicators.

31. The method according to claim 26 or 27, wherein the transmitting, by a positioning reference unit (PRU), a fifth message to a first core network device, comprises:
measuring, by the PRU, a positioning reference signal (PRS) transmitted by a TRP to obtain the reference signal measurement quantities and measurement quality indicators;
in case that the measurement quality indicators meet differential correction accuracy requirement, processing, by the PRU, the reference signal measurement quantities to obtain the second differential correction value;
transmitting, by the PRU, the fifth message to the first core network device; wherein the fifth message carries the second differential correction value.

32. The method according to claim 31, wherein the processing, by the PRU, the reference signal measurement quantities to obtain the second differential correction value, comprises at least one of the following:
performing, by the PRU, a difference operation between an RSTD measurement quantity and an ideal RSTD value to obtain an HRTD;
performing, by the PRU, a difference operation between an RSCPD measurement quantity and an ideal RSCPD value to obtain an RPD;
determining, by the PRU, a time variation rate of HRTD according to HRTDs at different moments; or
determining, by the PRU, a time variation rate of RPD according to RPDs at different moments.

33. A user equipment (UE), comprising: a memory, a transceiver, and a processor;
wherein the memory is used to store a computer program; the transceiver is used to transmit and receive data under control of the processor; the processor is used to read the computer program in the memory and perform the following operations:
receiving a first message transmitted by a first core network device; wherein the first message carries a first differential correction value;
performing positioning calculation according to the first differential correction value;
wherein the first differential correction value comprises at least one of the following:
a high-accuracy relative time difference (HRTD) between a non-reference transmission and reception point (TRP) and a reference TRP;
a relative phase difference (RPD) between a non-reference TRP and a reference TRP;
time variation rate of the HRTD; or
time variation rate of the RPD.

34. The UE according to claim 33, wherein the first message further carries at least one of the following information:
TRP transmission timing error group identity (TEG ID);
TRP transmission antenna identity;
antenna reference point identity (ARP ID);
time information corresponding to the HRTD; or,
time information corresponding to the RPD.

35. The UE according to claim 33, wherein the processor is used to read the computer program in the memory and perform the following operations:
transmitting a second message to the first core network device; wherein the second message carries a type of differential correction value that the UE expects to be provided by the first core network device.

36. The UE according to claim 33, wherein the processor is used to read the computer program in the memory and perform the following operations:
eliminating, according to the first differential correction value, phase offset and/or timing offset in reference signal carrier phase difference (RSCPD) measurement quantities, thereby obtaining a first RSCPD;
performing positioning calculation according to the first RSCPD.

37. A user equipment (UE), comprising:
a receiving unit used to receive a first message transmitted by a first core network device; wherein the first message carries a first differential correction value;
a processing unit used to perform positioning calculation according to the first differential correction value;
wherein the first differential correction value comprises at least one of the following:
a high-accuracy relative time difference (HRTD) between a non-reference transmission and reception point (TRP) and a reference TRP;
a relative phase difference (RPD) between a non-reference TRP and a reference TRP;
time variation rate of the HRTD; or
time variation rate of the RPD.

38. A core network device, comprising: a memory, a transceiver, and a processor;
wherein the memory is used to store a computer program; the transceiver is used to transmit and receive data under control of the processor; the processor is used to read the computer program in the memory and perform the following operation:
transmitting a first message to a user equipment (UE); wherein the first message carries a first differential correction value, and the first differential correction value comprises at least one of the following:
a high-accuracy relative time difference (HRTD) between a non-reference transmission and reception point (TRP) and a reference TRP;
a relative phase difference (RPD) between a non-reference TRP and a reference TRP;
time variation rate of the HRTD; or
time variation rate of the RPD.

39. The device according to claim 38, wherein the first message further carries at least one of the following information:
TRP transmission timing error group identity (TEG ID);
TRP transmission antenna identity;
antenna reference point identity (ARP ID);
time information corresponding to the HRTD; or,
time information corresponding to the RPD.

40. The device according to claim 38, wherein the processor is used to read the computer program in the memory and perform the following operation:
receiving a second message transmitted by the UE; wherein the second message carries a type of differential correction value that the UE expects to be provided by the first core network device.

41. The device according to any one of claims 38 to 40, wherein the processor is used to read the computer program in the memory and perform the following operation:
receiving a third message transmitted by one or more TRPs; wherein the third message carries a second differential correction value;
determining the first differential correction value according to the second differential correction value;
wherein the second differential correction value comprises at least one of the following:
a high-accuracy relative time difference (HRTD) between a non-reference transmission and reception point (TRP) and a reference TRP;
a relative phase difference (RPD) between a non-reference TRP and a reference TRP;
time variation rate of the HRTD; or
time variation rate of the RPD.

42. The device according to any one of claims 38 to 40, wherein the processor is used to read the computer program in the memory and perform the following operation:
receiving a fifth message transmitted by one or more positioning reference unit (PRUs); wherein the fifth message carries a second differential correction value;
determining the first differential correction value according to the second differential correction value;
wherein the second differential correction value comprises at least one of the following:
a high-accuracy relative time difference (HRTD) between a non-reference transmission and reception point (TRP) and a reference TRP;
a relative phase difference (RPD) between a non-reference TRP and a reference TRP;
time variation rate of the HRTD; or
time variation rate of the RPD.

43. The device according to any one of claims 38 to 40, wherein the processor is used to read the computer program in the memory and perform the following operation:
receiving a fifth message transmitted by one or more PRUs; wherein the fifth message carries reference signal measurement quantities and measurement quality indicators;
in case that the measurement quality indicators meet a differential correction accuracy requirement, determining the first differential correction value according to the reference signal measurement quantities.

44. A core network device, comprising:
a first transmission unit used to transmit a first message to a user equipment (UE); wherein the first message carries a first differential correction value, and the first differential correction value comprises at least one of the following:
a high-accuracy relative time difference (HRTD) between a non-reference transmission and reception point (TRP) and a reference TRP;
a relative phase difference (RPD) between a non-reference TRP and a reference TRP;
time variation rate of the HRTD; or
time variation rate of the RPD.

45. A transmission and reception point (TRP), comprising: a memory, a transceiver, and a processor;
wherein the memory is used to store a computer program; the transceiver is used to transmit and receive data under control of the processor; the processor is used to read the computer program in the memory and perform the following operation:
transmitting a third message to a first core network device; wherein the third message carries a second differential correction value, and the second differential correction value comprises at least one of the following:
a high-accuracy relative time difference (HRTD) between a non-reference transmission and reception point (TRP) and a reference TRP;
a relative phase difference (RPD) between a non-reference TRP and a reference TRP;
time variation rate of the HRTD; or
time variation rate of the RPD.

46. The TRP according to claim 45, wherein the processor is used to read the computer program in the memory and perform the following operation:
transmitting the third message to the first core network device in a periodic manner;
or,
in case that a first condition is satisfied, transmitting the third message to the first core network device;
wherein the first condition comprises at least one of the following:
the HRTD is greater than a first threshold;
the RPD is greater than a second threshold;
a measurement quality indication of an RSTD is greater than a third threshold; or
a measurement quality indication of an RSCPD is greater than a fourth threshold.

47. A transmission and reception point (TRP), comprising:
a transmission unit used to transmit a third message to a first core network device; wherein the third message carries a second differential correction value, and the second differential correction value comprises at least one of the following:
a high-accuracy relative time difference (HRTD) between a non-reference transmission and reception point (TRP) and a reference TRP;
a relative phase difference (RPD) between a non-reference TRP and a reference TRP;
time variation rate of the HRTD; or
time variation rate of the RPD.

48. A positioning reference unit (PRU), comprising: a memory, a transceiver, and a processor;
wherein the memory is used to store a computer program; the transceiver is used to transmit and receive data under control of the processor; the processor is used to read the computer program in the memory and perform the following operation:
transmitting a fifth message to a first core network device; wherein the fifth message carries a second differential correction value, or the fifth message carries reference signal measurement quantities and measurement quality indicators;
wherein the second differential correction value comprises at least one of the following:
a high-accuracy relative time difference (HRTD) between a non-reference transmission and reception point (TRP) and a reference TRP;
a relative phase difference (RPD) between a non-reference TRP and a reference TRP;
a time variation rate of the HRTD; or
time variation rate of the RPD.

49. The PRU according to claim 48, wherein the processor is used to read the computer program in the memory and perform the following operation:
measuring a positioning reference signal (PRS) transmitted by a TRP to obtain the reference signal measurement quantities and measurement quality indicators;
transmitting the fifth message to the first core network device; wherein the fifth message carries the reference signal measurement quantities and measurement quality indicators.

50. The PRU according to claim 48, wherein the processor is used to read the computer program in the memory and perform the following operation:
measuring a positioning reference signal (PRS) transmitted by a TRP to obtain the reference signal measurement quantities and measurement quality indicators;
in case that the measurement quality indicators meet differential correction accuracy requirement, processing the reference signal measurement quantities to obtain the second differential correction value;
transmitting the fifth message to the first core network device; wherein the fifth message carries the second differential correction value.

51. A positioning reference unit (PRU), comprising:
a transmission unit used to transmit a fifth message to a first core network device; wherein the fifth message carries a second differential correction value, or the fifth message carries reference signal measurement quantities and measurement quality indicators;
wherein the second differential correction value comprises at least one of the following:
a high-accuracy relative time difference (HRTD) between a non-reference transmission and reception point (TRP) and a reference TRP;
a relative phase difference (RPD) between a non-reference TRP and a reference TRP;
a time variation rate of the HRTD; or
time variation rate of the RPD.

52. A processor-readable storage medium, comprising a computer program stored thereon; wherein the computer program is used to cause a processor to execute steps of the information processing method according to any one of claims 1 to 32.
